(19) Europäisches Patentamt / European Patent Office / Office européen des brevets

(11) **EP 2 848 595 B1**

(12) **EUROPEAN PATENT SPECIFICATION**

(45) Date of publication and mention
of the grant of the patent:
**16.12.2020   Bulletin 2020/51**

(21) Application number: **13787108.3**

(22) Date of filing: **07.05.2013**

(51) Int Cl.:
*C03C 27/10* (2006.01)      *B32B 17/10* (2006.01)
*C08K 3/22* (2006.01)       *C09D 5/33* (2006.01)
*C09D 7/61* (2018.01)       *G02B 5/20* (2006.01)

(86) International application number:
**PCT/JP2013/062856**

(87) International publication number:
**WO 2013/168714 (14.11.2013 Gazette 2013/46)**

(54) **LAMINATED GLASS**

VERBUNDGLAS

VERRE STRATIFIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.05.2012   JP 2012107045**

(43) Date of publication of application:
**18.03.2015   Bulletin 2015/12**

(73) Proprietor: **Konica Minolta, Inc.**
**Tokyo 100-7015 (JP)**

(72) Inventor: **NOJIMA, Takahiko**
**Tokyo 100-7015 (JP)**

(74) Representative: **Green, Mark Charles**
**Urquhart-Dykes & Lord LLP**
**Euston House**
**24 Eversholt Street**
**London NW1 1AD (GB)**

(56) References cited:
**WO-A1-2012/014654      WO-A1-2012/014655
JP-A- H07 247 118       JP-A- H11 321 086
JP-A- 2009 062 411      JP-A- 2009 544 491
JP-A- 2010 228 959      JP-A- 2010 265 160
US-A1- 2007 048 519     US-A1- 2011 300 356**

Remarks:
The file contains technical information submitted after
the application was filed and not included in this
specification

EP 2 848 595 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to a laminated glass.

### BACKGROUND ART

In recent years, thermally insulated glasses having high heat-insulating properties or heat-shielding properties are available in the marketplace, for the purpose of saving energy by blocking the hot sensation perceived by the skin under the effect of sunlight penetrating through car windows, and suppressing the operation of air conditioners in cars.

For example, Japanese Patent Application Laid-Open No. 2008-24538 discloses a laminated glass in which inner glass plate/first resin layer/an infrared reflecting film containing a conductive body such as ITO (tin-doped indium oxide) as infrared absorbing material/second resin layer/outer glass plate are laminated.

Japanese Patent Application Laid-Open No. 2010-222233 (US Patent Application Publication No. 2011/0300356) discloses a laminated glass in which a functional plastic film having an infrared reflecting layer and an infrared absorbing layer is sandwiched between two sheets of glass plates with a thermoplastic resin adhesive.

Furthermore, Japanese Patent Application No. 2007-148330 (US Patent Application Publication No. 2009/0237782) discloses a near-infrared reflecting laminated glass in which a near-infrared reflecting film formed from a dielectric multilayer film is formed on a polymer resin sheet, and the near-infrared reflecting film is laminated between two sheets of glass plates using an intermediate film.

### SUMMARY OF INVENTION

#### Technical Problem

However, conventional laminated glasses still have various remaining problems.

A laminated glass that uses a heat-shielding film formed only from a conductive body such as ITO, which is an infrared absorber, has a problem that since the heat rays absorbed by the infrared absorbing layer is converted to heat and undergoes spreading diffusion in the interior of the vehicle, the heat-shielding effect is low.

Furthermore, a laminated glass that is produced using an infrared reflection type heat-shielding film having a metal film of Ag or the like formed thereon by a sputtering method or a chemical vapor deposition method (CVD method), is excellent from the viewpoint of reflecting heat rays; however, since the laminated glass reflects electromagnetic waves, there is a risk that there may be interruptions in the use of electronic equipment such as ETC's and mobile telephones installed in cars.

In order to achieve a balance between a sufficient heat-shielding effect and electromagnetic transmissibility and to maintain high transparency, a heat-shielding film which optimally combines an infrared reflecting function and an infrared absorbing function is desired.

As described in Japanese Patent Application Laid-Open No. 2008-24538, in an infrared reflecting film produced by incorporating an infrared absorptive substance into a light interference film in which high refractive index layers and low refractive index layers formed from organic materials are alternately laminated, since the difference in refractive index between the high refractive index layer and the low refractive index layer is small, it is necessary to conduct alternate lamination of several hundred or more layers. Thus, the infrared reflecting film is disadvantageous in that it is difficult to impart high productivity, and interlayer delamination is prone to occur upon folding or the like.

Furthermore, as described in Japanese Patent Application Laid-Open No. 2010-222233 (US Patent Application Publication No. 2011/0300356) and Japanese Patent Application Laid-Open No. 2007-148330 (US Patent Application Publication No. 2009/0237782), in the case of using a heat-shielding film in which a near-infrared reflecting film formed from an inorganic oxide by a sputtering method or a CVD method is provided on a polymer resin sheet, the difference in thermal shrinkage between the near-infrared reflecting layer and the polymer resin sheet is large. Also, when a laminated glass is produced, wrinkles are likely to be generated in the heat-shielding film, and the laminated glass has a defective external appearance.

WO 2012/014654 describes near-infrared reflective film and a near-infrared reflector, which can be used over large areas and are flexible, and have low haze and high visible light transmittance. The near-infrared reflective film comprises at least one unit composed of a high refractive index layer and low refractive index layer on a substrate, and is characterized in that the refractive index difference between an adjacent high refractive index layer and low refractive index layer is at least 0.1, and said high refractive index layer contains 1) a rutile-type titanium oxide having a volume-average particle diameter of not more than 100 nm; 2) a water-soluble polymer; and 3) at least one type of compound A) selected from the following group of compounds: a carboxyl group-containing compound, hydroxamic acids, pyridine derivatives.

WO 2012/014655 describes near-infrared reflective film and a near-infrared reflector provided with the same. The near-infrared reflector is characterized in that, in an infrared film in which high refractive index layers and low refractive index layers are alternately laminated on a support body, the refractive index difference between adjacent high refractive index layers and low refractive index layers is at least 0.3, and at least one of the high refractive index layers and low refractive index layers contains a metal oxide and a polysaccharide thickener.

As such conventional laminated glasses still have a problem that a sufficient heat-insulating effect may not be obtained, interruption of electromagnetic waves occurs, and productivity is low. Thus, it cannot be said that the conventional laminated glasses satisfactorily meet the requirements of the market.

The present invention was made in view of the problems described above, and an object of the present invention is to provide a laminated glass which has high visible light transmittance and an excellent heat-insulating effect against sunlight, and has reduced generation of optical film-derived wrinkles, cracks in an infrared reflecting layer, and the like when an optical film having an infrared reflecting layer is sandwiched between glass plates, so that the laminated glass can be produced with high productivity.

**Solution to Problem**

The object of the present invention described above is achieved by the following constitution.

(1) A laminated glass according to Claim 1 of the present invention.

DELETED

DELETED

The laminated glass according to Claim 1, wherein the difference in the degree of saponification between the polyvinyl alcohol (A) and the polyvinyl alcohol (B) is 5 mol% or more.

The first metal oxide particles are preferably titanium oxide particles surface-treated with a silicon-containing hydrated oxide.

The transparent resin film preferably has a thickness of 30 to 200 $\mu$m and a thermal shrinkage at a temperature of 150°C of 0.1% to 3.0%.

The optical film further preferably includes an infrared absorbing layer.

**DESCRIPTION OF EMBODIMENTS**

Hereinbelow, embodiments for carrying out the present invention are explained in detail.

According to a first aspect of the present invention, there is provided a laminated glass having at least two sheets of glass plates laminated with an intermediate layer disposed therebetween, in which the intermediate layer is formed by sandwiching an optical film containing an infrared reflecting layer on a transparent resin film between two sheets of intermediate films containing a thermoplastic resin; and the infrared reflecting layer is formed by alternately laminating a high refractive index layer that contains a first water-soluble binder rein and first metal oxide particles, and a low refractive index layer that contains a second water-soluble binder resin and second metal oxide particles.

The laminated glass of the present invention includes an optical film having an infrared reflecting layer that is sandwiched between two sheets of intermediate films containing a thermoplastic resin. The optical film according to the present invention is produced with high productivity by applying a unit composed of a high refractive index layer and a low refractive index layer by using a coating liquid for high refractive index layer and a coating liquid for low refractive index layer, which form a high refractive index layer and a low refractive index layer, respectively, so as to obtain a multilayer configuration.

Furthermore, the infrared reflecting layer according to the present invention is such that each layer of the high refractive index layers and the low refractive index layers contains a water-soluble binder resin and metal oxide particles. Thereby, the respective layers are controlled to have desired refractive indices, and also, desired flexibility can be imparted to the infrared reflecting layer, so that an optical film having high visible light transmittance and excellent infrared barrier properties is obtained.

The laminated glass of the present invention that uses such an optical film having high visible light transmittance and excellent infrared barrier properties, becomes a laminated glass having high visible light transmittance and an excellent heat-insulating effect against sunlight. Furthermore, since the optical film according to the present invention has superior flexibility compared to conventional metal films or metal oxide film produced by sputtering methods, when the optical film is sandwiched into the laminated glass, wrinkles are not easily generated, and cracks in the infrared reflecting layer are also not easily generated. Therefore, according to the present invention, a laminated glass in which wrinkles of the optical film are not easily generated, and which can be produced with high productivity, can be realized. Furthermore, the laminated glass of the present invention also has excellent electromagnetic wave transmissibility.

Hereinbelow, details of the constituent elements of the laminated glass of the present invention, embodiment for carrying out the present invention, and the like are explained.

{Laminated glass}

The laminated glass of the present invention includes an intermediate layer and at least two sheets of glass plates. The intermediate layer according to the present invention includes an optical film and two sheets of intermediate films containing a thermoplastic resin. Furthermore, the optical film according to the present invention includes an infrared reflecting layer that is formed by alternately laminating a high refractive index layer containing a first water-soluble binder resin and first metal oxide particles, and a low refractive index layer containing a second water-soluble binder resin and second metal oxide particles on a transparent resin film. Furthermore, the optical film according to the present invention may further include other layers such as an infrared absorbing layer, a heat-insulating layer, and a hard coat layer, if necessary.

In the laminated glass of the present invention, for example, a glass plate, an intermediate film, an optical film, an intermediate film, and a glass plate are disposed in this order from the light incident side. The two sheets of glass plates may be glass plates of the same kind, or may be glass plates of different kinds. Furthermore, the two sheets of intermediate films may have the same configuration, or may have different configurations . These will be described in detail below.

The laminated glass according to the present invention may be a flat-shaped laminated glass, or may be a curved laminated glass used in the windshield of cars.

The laminated glass of the present invention is preferably a laminated glass having a visible light transmittance of 70% or higher, particularly in the case of being used as car windows. Meanwhile, the visible light transmittance can be measured according to JIS R3106 (1998) "Testing method on transmittance, reflectance, and solar heat gain coefficient of flat glasses", for example, using a spectrophotometer (manufactured by Hitachi, Ltd., Model U-4000) .

The solar heat gain coefficient of the laminated glass of the present invention is preferably 60% or less, and more preferably 55% or less. When the solar heat gain coefficient is in this range, heat rays from the outside can be blocked more effectively. Meanwhile, the solar heat gain coefficient is determined according to JIS R3106 (1998) "Testing method on transmittance, reflectance, and solar heat gain coefficient of flat glasses", for example, using a spectrophotometer (manufactured by Hitachi, Ltd., Model U-4000) .

Hereinbelow, in regard to the constituent elements of the laminated glass of the present invention, the components contained in the various elements and the like are described in sequence.

<<Intermediate layer>>

In regard to the laminated glass of the present invention, the part sandwiched by at least two sheets of glass plates is referred to as an intermediate layer, and the intermediate layer according to the present invention has an optical film and an intermediate film.

[Optical film]

The optical film according to the present invention includes a transparent resin film; and an infrared reflecting layer formed by alternately laminating a high refractive index layer containing a first water-soluble binder resin and first metal oxide particles, and a low refractive index layer containing a second water-soluble binder resin and second metal oxide particles on the transparent film. The optical film according to the present invention may be any film having a multilayered infrared reflecting layer formed by alternately laminating a high refractive index layer and a low refractive index layer on a transparent resin film, and may further include, for example, an infrared absorbing layer, a heat-insulating layer, a hard coat layer, an adhesive layer, and the like. According to an embodiment, for example, an optical film in which an infrared reflecting layer, a transparent resin film, and a hard coat layer that also functions as an infrared absorbing layer are laminated in sequence from the light incident side may be provided.

The overall thickness of the optical film of the present invention is preferably 2 to 150 $\mu$m, more preferably 15 to 100 $\mu$m, and even more preferably 20 to 75 $\mu$m.

Regarding the optical characteristics of the optical film of the present invention, the visible light transmittance measured according to JIS R3106 (1998) is preferably 60% or higher, more preferably 70% or higher, and even more preferably 80% or higher (upper limit: 100%). Furthermore, it is preferable that the optical film has a region with a reflectance of higher than 50% (upper limit: 100%) in the wavelength region of 900 to 1400 nm.

<Infrared reflecting layer>

The infrared reflecting layer according to the present invention has a high refractive index layer containing a first water-soluble binder resin and first metal oxide particles, and a low refractive index layer containing a second water-soluble binder resin and second metal oxide particles. The thickness per layer of the high refractive index layer is preferably 20 to 800 nm, and more preferably 50 to 350 nm. Also, the thickness per layer of the low refractive index layer is preferably 20 to 800 nm, and more preferably 50 to 350 nm.

Here, when the thickness per layer is measured, the high refractive index layer and the low refractive index layer may have a conspicuous interface between these layers, or there may be a gradual conversion between the layers. In a case in which the interface undergoes a gradual conversion, a point defined by (smallest refractive index between the two layers + $\Delta n/2$), provided that (largest refractive index - smallest refractive index = $\Delta n$), within a region in which the respective layers are mixed and the refractive index continuously changes, is regarded as the layer interface. The same also applies to the layer thickness of the low refractive index layer that will be described below.

The metal oxide concentration profile of the infrared reflecting layer of the present invention that is formed by alternately laminating a high refractive index layer and a low refractive index layer can be observed by performing etching from the surface in the depth direction using a sputtering method, conducting sputtering at a rate of 0.5 nm/min using an XPS surface analyzer by defining the top surface as 0 nm, and analyzing the atomic composition ratio. Furthermore, it is also possible to cut a laminate film and analyze the atomic composition ratio of the cut surface with an XPS surface analyzer . When the concentration of metal oxide changes non-continuously in a mixed region, the boundary can be confirmed by a tomogram obtained by electron microscopy (TEM) .

The XPS surface analyzer is not particularly limited, and any model can be used; however, for example, ESCALAB-200R manufactured by VG Scientific, Ltd. can be used. An analysis is carried out at an output power of 600 W (accelerating voltage: 15 kV, emission current: 40 mA) using Mg for the X-ray anode.

In regard to the infrared reflecting layer according to the present invention, a preferred range of the total number of layers of the high refractive index layer and the low refractive index layer from the viewpoint of productivity is 100 layers or less and 15 layers or more, more preferably 40 layers or less and 15 layers or more, and even more preferably 30 layers or less and 15 layers or more.

In regard to the infrared reflecting layer, it is preferable to design the difference in the refractive index between the high refractive index layer and the low refractive index layer to be large, from the viewpoint that the infrared reflectance can be made higher with a smaller number of layers . In the present invention, the difference in the refractive index between a high refractive index layer and a low refractive index layer that are adjacent to each other is preferably 0.1 or more, more preferably 0.3 or more, even more preferably 0.35 or more, and still more preferably 0.4 or more. However, regarding the uppermost layer and the lowermost layer, a configuration other than the suitable range described above may also be employed.

Also, the reflectance of a particular wavelength region is determined by the difference in the refractive index of two adjacent layers and the number of laminated layers, and as the difference in the refractive index is larger, an equal reflectance can be obtained with a smaller number of layers. This difference in the refractive index and the required number of layers can be calculated using commercially available optical design software programs. For example, in order to obtain a near-infrared reflectance of 90% or higher, if the difference of refractive index is smaller than 0.1, lamination of 200 or more layers is needed. Thus, not only productivity is lowered, but also scattering at the lamination interface is increased, and transparency is decreased. Also, it is very difficult to produce the laminated glass without defects . From the viewpoint of enhancing the reflectance and decreasing the number of layers, there is no upper limit in the difference of refractive index, but the limit is substantially about 1.4.

In regard to the infrared reflecting layer according to the present invention, a layer configuration in which the lowermost layer that is adjacent to the transparent resin film is a low refractive index layer is preferred from the viewpoint of the adhesiveness to the transparent resin film.

Furthermore, according to the present invention, the first and second water-soluble binder resins that are contained in the high refractive index layer or the low refractive index layer are preferably polyvinyl alcohols. Also, it is preferable that the degree of saponification of the polyvinyl alcohol contained in the high refractive index layer and the degree of saponification of the polyvinyl alcohol contained in the low refractive index layer is different. Furthermore, the first metal oxide particles contained in the high refractive index layer are preferably titanium oxide particles that have been surface treated with a silicon-containing hydrated oxide.

(High refractive index layer)

The high refractive index layer according to the present invention contains a first water-soluble binder resin and first metal oxide particles as essential components, and may optionally further contain at least one selected from the group consisting of a curing agent, another binder resin, a surfactant, and various additives.

The refractive index of the high refractive index layer according to the present invention is preferably 1.80 to 2.50, and more preferably 1.90 to 2.20.

(First water-soluble binder resin)

The first water-soluble binder resin according to the present invention implies that when the water-soluble binder resin is dissolved in water at a concentration of 0.5% by mass at the temperature at which the water-soluble binder resin dissolves at maximum, the mass of insoluble materials that are separated by filtration when filtered through a G2 glass filter (maximum pore size: 40 to 50 $\mu$m) is 50% by mass or less of the added water-soluble binder resin.

The weight average molecular weight of the first water-soluble binder resin according to the present invention is preferably from 1,000 to 200,000. The weight average molecular weight is more preferably from 3,000 to 40,000.

The weight average molecular weight according to the present invention can be measured according to a known method, and the weight average molecular weight can be measured by, for example, static light scattering, gel permeation chromatography (GPC), or time-of-flight mass spectrometry (TOF-MASS). In the present invention, the weight average molecular weight is measured according to gel permeation chromatography, which is a generally known method.

The content of the first water-soluble binder resin in the high refractive index layer is preferably 5% to 50% by mass, and more preferably 10% to 40% by mass, relative to 100% by mass of the solid content of the high refractive index layer.

The first water-soluble binder resin is preferably a polyvinyl alcohol. Furthermore, the second water-soluble binder resin that is present in the low refractive index layer that will be described below is also preferably a polyvinyl alcohol. Therefore, in the following, the polyvinyl alcohols that are included in the high refractive index layer and the low refractive index layer will be explained together.

[Polyvinyl alcohol]

According to the present invention, it is preferable that the high refractive index layer and the low refractive index layer contain two or more kinds of polyvinyl alcohols having different degrees of saponification. Here, in order to distinguish between the polyvinyl alcohols, the polyvinyl alcohol as the first water-soluble binder resin is referred to as polyvinyl alcohol (A), and the polyvinyl alcohol as the second water-soluble binder resin is referred to as polyvinyl alcohol (B). Meanwhile, in a case in which each refractive index layer contains plural polyvinyl alcohols having different degrees of saponification or different degrees of polymerization, the polyvinyl alcohol of the largest content in each refractive index layer is referred to as polyvinyl alcohol (A) in the high refractive index layer, and as polyvinyl alcohol (B) in the low refractive index layer, respectively.

The "degree of saponification" as used in the present specification is the proportion of hydroxyl groups relative to the total number of acetyloxy groups (derived from vinyl acetate of in the raw material) and hydroxyl groups in a polyvinyl alcohol.

Furthermore, when the term "polyvinyl alcohol of the largest content in the refractive index layer" as used herein is mentioned, polyvinyl alcohols having a difference in the degree of saponification of 3 mol% or less are regarded as identical polyvinyl alcohols, and thus the degree of polymerization is calculated. However, a low-polymerization-degree polyvinyl alcohol having a degree of polymerization of 1000 or less is considered as a different polyvinyl alcohol (even if there is a polyvinyl alcohol having a difference in the degree of saponification of 3 mol% or less, the two are not considered as identical polyvinyl alcohols). Specifically, when a polyvinyl alcohol having a degree of saponification of 90 mol%, a polyvinyl alcohol having a degree of saponification of 91 mol%, and a polyvinyl alcohol having a degree of saponification of 93 mol% are included in the same layer at contents of 10% by mass, 40% by mass, and 50% by mass, respectively, these three polyvinyl alcohols are considered as identical polyvinyl alcohols, and a mixture of these three polymers is designated as polyvinyl alcohol (A) or (B). Furthermore, regarding the "polyvinyl alcohols having a difference in the degree of saponification of 3 mol% or less", it is satisfactory if attention is paid to any one polyvinyl alcohol, and the difference in the degree of saponification relative to that polyvinyl alcohol is 3 mol% or less. For example, in the case of a layer containing polyvinyl alcohols having degrees of saponification of 90 mol%, 91 mol%, 92 mol%, and 94 mol%, when attention is paid to the polyvinyl alcohol having a degree of saponification of 91 mol%, since the difference in the degree of saponification with any polyvinyl alcohol is within 3 mol%, the polyvinyl alcohols are considered as identical polyvinyl alcohols.

When polyvinyl alcohols having a difference in the degree of saponification of 3 mol% or more are included in the same layer, these polymers are considered as a mixture of different polyvinyl alcohols, and the degrees of polymerization and the degrees of saponification of the respective polymers are calculated. For example, in a case in which PVA203: 5% by mass, PVA117: 25% by mass, PVA217: 10% by mass, PVA220: 10% by mass, PVA224: 10% by mass, PVA235: 20% by mass, and PVA245: 20% by mass are included, the PVA (polyvinyl alcohol) of the largest content is a mixture of PVA217 to PVA245 (since the difference in the degree of saponification of PVA217 to PVA245 is 3 mol% or less, they are identical polyvinyl alcohols), and this mixture is designated as polyvinyl alcohol (A) or (B). Thus, in the mixture of PVA217 to PVA245 (polyvinyl alcohol (A) or (B)), the degree of polymerization is (1700 × 0.1 + 2000 × 0.1 + 2400 × 0.1 + 3500 × 0.2 + 4500 × 0.7)/0.7 = 3200, and the degree of saponification is 88 mol%.

The difference of the absolute values of the degree of saponification between polyvinyl alcohol (A) and polyvinyl alcohol (B) may be 1 mol% or more, preferably 3 mol% or more, and more preferably 5 mol% or more. When the difference is in this range, it is preferable because the state of interlayer mixing between the high refractive index layer and the low refractive index layer is achieved at a preferable level. Furthermore, it is more preferable if the difference in the degree of saponification between polyvinyl alcohol (A) and polyvinyl alcohol (B) is larger; however, from the viewpoint of the solubility of polyvinyl alcohol in water, the difference of the degree of saponification is preferably 20 mol% or less.

Furthermore, the degrees of saponification of the polyvinyl alcohol (A) and the polyvinyl alcohol (B) are preferably 75 mol% or more from the viewpoint of solubility in water. Also, it is preferable that one of the polyvinyl alcohol (A) and the polyvinyl alcohol (B) has a degree of saponification of 90 mol% or more, and the other has a degree of saponification of 90 mol% or less, in order to bring the state of interlayer mixing between the high refractive index layer and the low refractive index layer to a preferred level. It is more preferable that one of the polyvinyl alcohol (A) and the polyvinyl alcohol (B) has a degree of saponification of 95 mol% or more, and the other has a degree of saponification of 90 mol% or less. Meanwhile, there are no particular limitations on the upper limit of the degree of saponification of the polyvinyl alcohol; however, the upper limit is usually less than 100 mol%, and is about 99.9 mol% or less.

Furthermore, regarding the degrees of polymerization of the two kinds of polyvinyl alcohols having different degrees of saponification, polyvinyl alcohols having degrees of polymerization of 1,000 or more are preferably used, and particularly, polyvinyl alcohols having degrees of polymerization of 1,500 to 5,000 are more preferred, while polyvinyl alcohols having degrees of polymerization of 2,000 to 5,000 are even more preferably used. It is because when the degree of polymerization of a polyvinyl alcohol is 1,000 or more, no cracking occurs in the coating film, and when the degree of polymerization is 5,000 or less, the coating liquid is stabilized. The phrase "the coating liquid is stabilized" as used in the present specification means that the coating liquid becomes stable over time. When the degree of polymerization of at least one of the polyvinyl alcohol (A) and the polyvinyl alcohol (B) is 2,000 to 5,000, it is preferable because cracks in the coating film are reduced, and the reflectance at particular wavelengths is improved. When the degrees of polymerization of both the polyvinyl alcohol (A) and the polyvinyl alcohol (B) are 2,000 to 5,000, it is preferable because the above-described effect can be exhibited more significantly.

The "degree of polymerization" as used in the present specification refers to the viscosity average degree of polymerization, which is measured according to JIS K6726 (1994). The viscosity average degree of polymerization can be obtained by completely re-saponifying PVA, purifying the PVA, and then determining by the following formula from the intrinsic viscosity $[\eta]$ (dl/g) measured in water at 30°C.

[Math. 1]

$$P = ([\eta] \times 10^3/8.29)^{(1/0.62)}$$

The polyvinyl alcohol (B) contained in the low refractive index layer preferably has a degree of saponification of from 75 mol% to 90 mol%, and a degree of polymerization of from 2,000 to 5,000. When such a polyvinyl alcohol is incorporated into the low refractive index layer, it is preferable from the viewpoint that interface mixing is further suppressed. This is considered to be because cracking in the coating film is reduced, and settability is enhanced.

For the polyvinyl alcohols (A) and (B) used in the present invention, synthetic products may be used, or commercially available products may also be used. Examples of commercially available products that may be used as polyvinyl alcohols (A) and (B) include, for example, PVA-102, PVA-103, PVA-105, PVA-110, PVA-117, PVA-120, PVA-124, PVA-203, PVA-205, PVA-210, PVA-217, PVA-220, PVA-224, and PVA-235 (all manufactured by Kuraray Co., Ltd.); JC-25, JC-33, JF-03, JF-04, JF-05, JP-03, JP-04, JP-05, JP-45, and JM-33 (all manufactured by Japan Vam & Poval Co., Ltd.).

The first water-soluble binder resin according to the present invention may include a modified polyvinyl alcohol that has been partially modified, in addition to a conventional polyvinyl alcohol obtainable by hydrolyzing polyvinyl acetate, as long as the effects of the present invention are not impaired. When the first water-soluble binder resin includes such a modified polyvinyl alcohol, adhesiveness, water resistance, and flexibility of the film may be improved. Examples of such a modified polyvinyl alcohol include a cationically modified polyvinyl alcohol, an anionically modified polyvinyl alcohol, a nonionically modified polyvinyl alcohol, and a vinyl alcohol-based polymer.

An example of the cationically modified polyvinyl alcohol may be the polyvinyl alcohol described in Japanese Patent Application Laid-Open No. Sho61-10483, which has primary to tertiary amino groups or quaternary ammonium groups in the main chain or side chains of the polyvinyl alcohol. This polyvinyl alcohol may be obtained by saponifying a copolymer of an ethylenically unsaturated monomer having a cationic group and vinyl acetate.

Examples of the ethylenically unsaturated monomer having a cationic group include trimethyl-(2-acrylamido-2,2-dimethylethyl)ammonium chloride, trimethyl-(3-acrylamido-3,3-dimethylpropyl)ammonium chloride, N-vinylimidazole, N-vinyl-2-methylimidazole, N-(3-dimethylaminopropyl)methacrylamide, hydroxyethyltrimethylammonium chloride, trimethyl-(2-methacrylamidopropyl)ammonium chloride, and N-(1,1-dimethyl-3-dimethylaminopropyl)acrylamide. The proportion of a cationically modified group-containing monomer of the cationically modified polyvinyl alcohol is 0.1 mol% to 10 mol%, and preferably 0.2 mol% to 5 mol%, with respect to vinyl acetate.

Examples of the anionically modified polyvinyl alcohol include polyvinyl alcohols having anionic groups as described in Japanese Patent Application Laid-Open No. Hei1-206088; copolymers of vinyl alcohol and a vinyl compound having water-soluble groups, as described in Japanese Patent Application Laid-Open No. Sho61-237681 and Japanese Patent Application Laid-Open No. Sho63-307979; and modified polyvinyl alcohols having water-soluble groups described in Japanese Patent Application Laid-Open No. Hei7-285265.

Furthermore, examples of the nonionically modified polyvinyl alcohol include the polyvinyl alcohol derivatives obtained by adding polyalkylene oxide groups to a portion of vinyl alcohol, as described in Japanese Patent Application Laid-Open No. Hei7-9758; block copolymers of a vinyl compound having a hydrophobic group and vinyl alcohol, as described in Japanese Patent Application Laid-Open No. Hei8-25795; silanol-modified polyvinyl alcohols having silanol groups; and reactive group-modified polyvinyl alcohols having reactive groups such as an acetoacetyl group, a carbonyl group, and a carboxyl group.

Furthermore, examples of the vinyl alcohol-based polymer include EXCEVAL (registered trademark, manufactured by Kurary Co., Ltd.) and NICHIGO G-POLYMER (registered trademark, manufactured by Nippon Synthetic Chemical Industry Co., Ltd.).

For the modified polyvinyl alcohol, two or more kinds having different degrees of polymerization or different kinds of modification can be used in combination.

The content of the modified polyvinyl alcohol is not particularly limited, but is preferably 1% to 30% by mass relative to the total mass (solid content) of the various refractive index. layers When the content is in this range, the above-described effects are exhibited more satisfactorily.

According to the present invention, two kinds of polyvinyl alcohols having different degrees of saponification are used respectively in different layers having different refractive indices.

For example, in a case in which a polyvinyl alcohol (A) having a low degree of saponification is used in the high refractive index layer, and a polyvinyl alcohol (B) having a high degree of saponification is used in the low refractive index layer, it is preferable that the polyvinyl alcohol (A) in the high refractive index layer is included in an amount in the range of from 40% by mass to 100% by mass, and more preferably from 60% by mass to 95% by mass, relative to the total mass of all the polyvinyl alcohols in the layer; and it is preferable that the polyvinyl alcohol (B) in the low refractive index layer is included in an amount in the range of from 40% by mass to 100% by mass, and more preferably from 60% by mass to 95% by mass, relative to the total mass of all the polyvinyl alcohols in the low refractive index layer. Furthermore, when a polyvinyl alcohol (A) having a high degree of saponification is used in the high refractive index layer, and a polyvinyl alcohol (B) having a low degree of saponification is used in the low refractive index layer, it is preferable that the polyvinyl alcohol (A) in the high refractive index layer is included in an amount in the range of from 40% by mass to 100% by mass, and more preferably from 60% by mass to 95% by mass, relative to the total mass of all the polyvinyl alcohols in the layer; and it is preferable that the polyvinyl alcohol (B) in the low refractive index layer is included in an amount in the range of from 40% by mass to 100% by mass, and more preferably from 60% by mass to 95% by mass, relative to the total mass of all the polyvinyl alcohols in the low refractive index layer. When the content is 40% by mass or more, interlayer mixing is suppressed, and the effect that disruption of the interface is reduced is noticeably manifested. On the other hand, when the content is 100% by mass or less, stability of the coating liquid is enhanced.

(Binder resin)

In regard to the high refractive index layer according to the present invention, as the water-soluble binder resin other than polyvinyl alcohol, any binder resin can be used without any limitation as long as the high refractive index layer containing the first metal oxide particles can form a coating film. Also for the low refractive index layer that will be described below, as the water-soluble binder resin other than polyvinyl alcohol, any binder resin can be used without any limitation as long as the low refractive index layer containing the second metal oxide particles can form a coating film. However, when environmental problems or flexibility of the coating film is considered, a water-soluble polymer (particularly, gelatin, a thickening polysaccharide, and a polymer having a reactive functional group) is preferred. Such a water-soluble polymer may be used singly, or two or more kinds thereof may be used in mixture.

In regard to the high refractive index layer, the content of the other binder resin that is used in combination with the polyvinyl alcohol that is preferably used as the first water-soluble binder resin can be adjusted to 5% to 50% by mass relative to 100% by mass of the solid content of the high refractive index layer.

According to the present invention, from the viewpoint of not needing to use an organic solvent and being preferable for environment preservation, the binder resin is preferably composed of a water-soluble polymer. That is, in the present invention, as long as the effects of the invention are not impaired, a water-soluble polymer other than a polyvinyl alcohol and a modified polyvinyl alcohol may also be used as the binder resin, in addition to the polyvinyl alcohol and the modified polyvinyl alcohol. The term water-soluble polymer implies that when the water-soluble polymer is dissolved in water at a concentration of 0.5% by mass at the temperature at which the water-soluble polymer dissolves at maximum, the mass of insoluble materials that are separated by filtration when filtered through a G2 glass filter (maximum pore size: 40 to 50 μm) is 50% by mass or less of the added water-soluble binder resin. Among such water-soluble polymers, particularly gelatin, celluloses, thickening polysaccharides, or polymers having reactive functional groups are preferred. These water-soluble polymers may be used singly, or two or more kinds thereof may be used in mixture.

Hereinbelow, these water-soluble polymers will be explained.

Gelatin

Regarding the gelatin that can be applied to the present invention, various gelatins that have been widely used in the field of silver halide photographic sensitized materials can be applied. For example, in addition to acid-treated gelatin and alkali-treated gelatin, enzymatically treated gelatin that is enzymatically treated in the production process for gelatin, and gelatin derivatives, that is, gelatin derivatives having amino groups, imino groups, hydroxyl groups, and carboxyl groups as functional groups in the molecule, which have been modified by treating with reagents having groups that are obtainable by reacting with the functional groups, may be used. General production methods for gelatin are well known, and for example, reference can be made to the descriptions in T.H. James: The Theory of Photographic Process, 4th. ed., 1977 (Macmillan), p. 55; Kagaku Shashin Benran (Handbook of Scientific Photographs) (1st), pp. 72-75 (Maruzen) ; Shashin Kogaku no Kiso - Gin En Shashin-hen (Fundamentals of Photographic Engineering - Silver Salt photography), pp. 119-124 (Corona Corp.), and the like. Furthermore, the gelatin described in Research Disclosure, Vol. 176, No. 17643 (December, 1978), p. IX, may be considered.

It is preferable that each of the high refractive index layers or each of the low refractive index layers contains: 1) a low molecular weight gelatin or collagen peptide having a weight average molecular weight of 30,000 or less (hereinafter, simply referred to as low molecular weight gelatin), and 2) a high molecular weight gelatin having a weight average molecular weight of 100,000 or more. When a low molecular weight gelatin and a high molecular weight gelatin are used in combination, it is preferable from the viewpoint that high viscosity is obtained at the time of film cooling during coating and drying while viscosity increase at the time of liquid preparation is suppressed, and thus excellent uniformity of the coating film is obtained. Furthermore, when metal oxide particles coated with a low molecular weight gelatin are used in combination with a high molecular weight gelatin, it is preferable because uniformity of the coating film is further enhanced.

The content of the low molecular weight gelatin in the refractive index layer is preferably 10% to 50% by mass, and more preferably 15% to 35% by mass, relative to 100% by mass of the solid content of each of the high refractive index layers or the low refractive index layers. Furthermore, the content of the high molecular weight gelatin in the refractive index layer is preferably 10% to 50% by mass, and more preferably 15% to 40% by mass, relative to 100% by mass of each of the high refractive index layers or the low refractive index layers. Furthermore, the mixing mass ratio of the low molecular weight gelatin and the high molecular weight gelatin is preferably such that low molecular weight gelatin : high molecular weight gelatin = 1 : 0.25 to 8, and more preferably 1 : 0.5 to 3, in each of the high refractive index layers or the low refractive index layers. When the gelatins are incorporated in such a range, it is preferable because uniformity of the coating film is enhanced.

(Low molecular weight gelatin)

In the case of using the gelatin of the present invention together with metal oxide particles, it is preferable to apply a low molecular weight gelatin or a collagen peptide from the viewpoint of preventing coating unevenness caused by dispersion destruction of the metal oxide in the coating liquid and preventing white turbidness of the coating film after coating film formation, and it is more preferable to apply the gelatin in the same layer as the layer containing the metal oxide particles.

The low molecular weight gelatin refers to a gelatin having a weight average molecular weight of 30,000 or less, and it is preferable that the content of a high molecular weight gelatin component having a weight average molecular weight of 100,000 or more is 1.0% by mass or less. Here, the collagen peptide is defined as a protein that has been obtained by subjecting gelatin to a molecular weight reduction treatment so as not to exhibit a sol-gel transformation. The low molecular weight gelatin or collagen peptide preferably has a weight average molecular weight of 2,000 to 30,000, and particularly preferably 5,000 to 25,000. When the weight average molecular weight is in this range, the coating liquid has adequate viscosity and excellent handleability. Also, since the amount of gelatin required is also adequate, the volume proportion of the metal oxide fine particles is maintained, an appropriate difference in the refractive index can be obtained, and the number of layers required can be reduced.

In regard to the low molecular weight gelatin or collagen peptide, it is preferable to sufficiently conduct degradation of a high molecular weight gelatin having a weight average molecular weight of 100,000 or more that is used as a raw material in the process for producing the low molecular weight gelatin or collagen peptide, and to appropriately set the conditions such as the kind and the amount of addition of the gelatin degrading enzyme, and the temperature or time at the time of enzymatic degradation so as to adjust the content of the low molecular weight gelatin or collagen peptide to 1.0% by mass or less, and to optimally conduct enzymatic degradation of the high molecular weight gelatin molecules.

(High molecular weight gelatin)

According to the present invention, when at least the high refractive index layer contains a high molecular weight gelatin having a weight average molecular weight of 100,000 or more, it is preferable because sufficient film strength can be obtained at the time of coating and drying, and uniformity of the coating layer is enhanced. It is particularly preferable that the weight average molecular weight of the high molecular weight gelatin is in the range of from 100,000 to 200,000.

According to the present invention, the weight average molecular weight of the high molecular weight gelatin used can be measured by, for example, a gel permeation chromatographic method. The molecular weight distribution and the weight average molecular weight of gelatin can also be measured by a gel permeation chromatographic method (GPC method), which is a generally known method.

Hardening agent for gelatin

When gelatin is used, a hardening agent for gelatin can be added as necessary.

Regarding the hardening agent that can be used, any known compound that is conventionally used as a hardening agent for photographic emulsion layer can be used, and examples thereof include organic hardening agents such as a vinylsulfone compound, a urea-formalin condensate, a melanin-formalin condensate, an epoxy-based compound, an aziridine-based compound, an active olefin, and an isocyanate -based compound; and inorganic salts of polyvalent metals such as chromium, aluminum, and zirconium.

Celluloses

Regarding the celluloses that can be used in the present invention, water-soluble cellulose derivatives can be preferably used, and examples thereof include water-soluble cellulose derivatives such as carboxymethyl cellulose (cellulose carboxymethyl ether), methyl cellulose, hydroxymethyl cellulose, hydroxyethyl cellulose, and hydroxypropyl cellulose; and carboxymethyl cellulose (cellulose carboxymethyl ether) and carboxyethyl cellulose, which are carboxylic acid group-containing celluloses. Other examples include cellulose derivatives such as nitrocellulose, cellulose acetate propionate, cellulose acetate, and cellulose sulfuric acid ester.

Thickening polysaccharides

There are no particular limitations on the thickening polysaccharides that can be used in the present invention, and examples thereof include naturally occurring simple polysaccharides, naturally occurring composite polysaccharides, synthetic simple polysaccharides, and synthetic composite polysaccharides that are generally known. For the details of these polysaccharides, reference can be made to "Seikagaku Jiten (Encyclopedia of Biochemistry (2nd Edition), published by Tokyo Kagaku Dojin"; "Shokuhin Kogyo (Food Industry)", Vol. 31 (1988), p. 21; and the like.

The thickening polysaccharides as used in the present invention are polymers of saccharides having a large number of hydrogen bonding groups in the molecule, and are polysaccharides having a characteristic that the difference between the viscosity at a low temperature and the viscosity at a high temperature is large due to the temperature-induced difference in the hydrogen bonding force between molecules. Furthermore, the thickening polysaccharides are polysaccharides that cause, when metal oxide fine particles are added, an increase in viscosity that is thought to be caused by hydrogen bonding with the metal oxide fine particles at a low temperature, in which the width of the viscosity increase is such that the addition of the thickening polysaccharides causes the viscosity at 15°C to be increased by 1.0 mPa·s or more. The thickening polysaccharides are polysaccharides having an ability to increase the viscosity by preferably 5.0 mPa·s or more, and more preferably 10.0 mPa·s or more.

Examples of the thickening polysaccharides that can be applied to the present invention include galactans (for example, agarose and agaropectin), galactomannoglycans (for example, locust bean gum and guaran), xyloglucans (for example, tamarind gum), glucomannoglycans (for example, konjacmannan, wood-derived glucomannan, and xanthan gum), galactoglucomannoglycans (for example, coniferous wood-derived glycans), arabinogalactoglycans (for example, soybean-derived glycans and microbial-derived glycans), glucorhamnoglycans (for example, gellan gum), glycosaminoglycans (for example, hyaluronic acid and keratan sulfate), alginic acid and alginates, agar, and naturally occurring high molecular weight polysaccharides derived from red algae, such as κ-carrageenan, λ-carrageenan, ι -carrageenan and furcellaran. From the viewpoint of not lowering the dispersion stability of the metal oxide fine particles that are co-present in the coating liquid, preferably, polysaccharides having constituent units that do not have any carboxylic acid groups or sulfonic acid groups are preferred. Such polysaccharides are preferably, for example, polysaccharides composed only of pentoses such as L-arabitose, D-ribose, 2-deoxyribose, and D-xylose; and hexoses such as D-glucose, D-fructose, D-mannose, and D-galactose. Specifically, tamarind seed gum that is known as a xyloglucan in which the main chain is composed of glucose and the side chains are also composed of glucose; guar gum, cationized guar gum, hydroxypropyl guar gum, locust bean gum, and tara gum that are known as galactomannans in which the main chain is composed of mannose and the side chains are composed of glucose; and arabinogalactans in which the main chain is composed of galactose and the side chains are composed of arabinose, can be preferably used. According to the present invention, tamarind, guar gum, cationized guar gum, and hydroxypropyl guar gum are particularly preferred.

According to the present invention, two or more kinds of thickening polysaccharides can also be used in combination.

Polymers having reactive functional groups

The water-soluble polymer that can be applied to the present invention may be a polymer having reactive functional groups. Examples thereof include polyvinylpyrrolidones; acrylic resins such as polyacrylic acid, acrylic acid-acrylonitrile copolymers, potassium acrylate-acrylonitrile copolymers, vinyl acetate-acrylic acid ester copolymers, and acrylic acid-acrylic acid ester copolymers; styrene-acrylic acid resins such as styrene-acrylic acid copolymers, styrene-methacrylic acid copolymers, styrene-methacrylic acid-acrylic acid ester copolymers, styrene-a-methylstyrene-acrylic acid copolymers, and styrene-a-methylstyrene-acrylic acid-acrylic acid ester copolymers; styrene-sodium styrenesulfonate copolymers, styrene-2-hydroxyethyl acrylate copolymers, styrene-2-hydroxyethyl acrylate-potassium styrenesulfonate copolymers, styrene-maleic acid copolymers, styrene-maleic anhydride copolymers, vinylnaphthalene-acrylic acid copolymers, vinylnaphthalene-maleic acid copolymers; vinyl acetate-based copolymers such as vinyl acetate-maleic acid ester copolymers, vinyl acetate-crotonic acid copolymers, and vinyl acetate-acrylic acid copolymers; and salts thereof. Among these, particularly preferred examples include polyvinylpyrrolidones and copolymers containing these.

(First metal oxide particles)

The first metal oxide particles according to the present invention are preferably metal oxide particles having a refractive index of from 2.0 to 3.0. More specifically, examples thereof include titanium oxide, zirconium oxide, zinc oxide, synthetic amorphous silica, colloidal silica, alumina, colloidal alumina, lead titanate, red lead, yellow lead, zinc yellow, chromium oxide, ferric oxide, iron black, copper oxide, magnesium oxide, magnesium hydroxide, strontium titanate, yttrium oxide, niobium oxide, europium oxide, lanthanum oxide, zirconia, and tin oxide. Furthermore, composite oxide particles composed of plural metals; core-shell particles in which the metal composition changes in a core-shell shape; and the like can also be used.

In order to form a high refractive index layer that is transparent and has a higher refractive index, it is preferable to incorporate oxide fine particles of metals having high refractive indices, such as titanium and zirconium, that is, titanium oxide fine particles and/or zirconia oxide fine particles, into the high refractive index layer according to the present invention. Among these, from the viewpoint of the stability of the coating liquid for forming a high refractive index layer, titanium oxide is more preferred. Furthermore, among titanium oxides, since the rutile type (tetragonal system) has lower catalytic activity than the anatase type, weather resistance of the high refractive index layer or an adjacent layer is increased, and the refractive index is further increased, which is more preferable.

Furthermore, when core-shell particles are used as the first metal oxide particles in the high refractive index layer according to the present invention, core-shell particles in which titanium oxide particles are surface treated (coated) with a silicon-containing hydrated oxide are even more preferred in view of the effect that interlayer mixing between the high refractive index and an adjacent layer is suppressed by the interaction between the silicon-containing hydrated oxide of the shell layer and the first water-soluble binder resin.

Regarding the aqueous solution containing titanium oxide particles that are used in the core of the core-shell particles according to the present invention, it is preferable to use an aqueous solution having a pH of 1.0 to 3.0, which is prepared by hydrophobizing the surface of a water-based titanium oxide sol in which the zeta potential of titanium oxide particles is positive, and thereby making the titanium oxide particles dispersible in an organic solvent.

When the content of the first metal oxide particles according to the present invention is 15% to 80% by mass relative to 100% by mass of the solid content of the high refractive index layer, it is preferable from the viewpoint of imparting a difference in the refractive index between the high refractive index layer and the low refractive index layer.

Furthermore, the content of the first metal oxide particles is more preferably 20% to 77% by mass, and even more preferably 30% to 75% by mass. Meanwhile, in a case in which the first metal oxide particles other than the core-shell particles are included in the high refractive index layer of the present invention, the content of the first metal oxide particles is not particularly limited as long as the content is in the extent that the effects of the present invention can be provided.

According to the present invention, the volume average particle size of the first metal oxide particles is preferably 30 nm or less, more preferably 1 to 30 nm, and even more preferably 5 to 15 nm. When the volume average particle size is from 1 nm to 30 nm, it is preferable from the viewpoint of having a low haze value and excellent visible light transmissibility.

The volume average particle size of the first metal oxide particles according to the present invention is a volume-weighted average particle size obtained by measuring the particle sizes of any 1,000 particles by a method of observing the particles themselves by a laser diffraction scattering method, a dynamic light scattering method or electron microscopy, or by a method of observing particle images appearing at a cross-section or the surface of the refractive index layer by electron microscopy; and calculating, for a population of particulate metal oxide in which particles having particle sizes of d1, d2, ..., di, ... dk, respectively, exist in the numbers of n1, n2, ... ni, ..., nk, respectively, when the volume per particle is designated as vi, the average particle size represented by formula: volume average particle size $mv = \{\sum(vi \cdot di)\}/\{\sum(vi)\}$.

Furthermore, it is preferable that the first metal oxide particles according to the present invention are monodisperse. The term monodisperse as used herein means that the monodispersity that can be determined by the following formula is 40% or less. This monodispersity is more preferably 30% or less, and particularly preferably 0.1% to 20%.

[Math. 2]

$$\text{Monodispersity} = (\text{Standard deviation of particle size})/(\text{average particle size}) \times 100$$

[Core-shell particles]

The "titanium oxide particles surface treated with a silicon-containing hydrated oxide" as used in the present specification are also referred to as "core-shell particles", and may also be referred to as "Si-coated $TiO_2$".

The core-shell particles according to the present invention have a structure in which titanium oxide particles are coated with a silicon-containing hydrated oxide, and preferably, the surface of titanium oxide particles having an average particle size of more than 1 nm and less than 30 nm, more preferably 4 nm or more and less than 30 nm, is coated with a shell formed of a silicon-containing hydrated oxide such that the amount of coating of the silicon-containing hydrated oxide in terms of $SiO_2$ is 3% to 30% by mass with respect to the titanium oxide that constitutes the core.

That is, in the present invention, an effect that intermixing between a high refractive index layer and a low refractive index layer is suppressed by the interaction between the silicon-containing hydrated oxide in the shell layer and the first water-soluble binder resin, and an effect that problems such as deterioration of the binder caused by the photocatalytic activity of titanium oxide, and chalking in the case of using titanium oxide as the core, are provided by incorporating core-shell particles.

The core-shell particles of the present invention are such that the amount of coating of the silicon-containing hydrated oxide in terms of $SiO_2$ is preferably 3% to 30% by mass, more preferably 3% to 10% by mass, and even more preferably 3% to 8% by mass, with respect to the titanium oxide that constitutes the core. If the amount of coating is more than 30% by mass, it may be difficult to allow the high refractive index layer to acquire a high refractive index. Also, if the amount of coating is less than 3% by mass, it may be difficult to form the particles of core-shell particles stably.

Furthermore, the average particle size of the core-shell particles of the present invention is preferably 1 to 30 nm, more preferably 5 to 20 nm, and even more preferably 5 to 15 nm. When the average particle size of the core-shell particles is 1 to 30 nm, optical characteristics such as near-infrared reflectance, transparency and haze are further enhanced.

The average particle size as used in the present specification means a primary average particle size, and can be measured from electron microscopic photographs obtained by transmission electron microscopy (TEM) or the like. The average particle size may also be measured by a particle size distribution meter that utilizes a dynamic light scattering method, a static light scattering method, or the like.

Furthermore, when determined by electron microscopy, the average particle size of primary particles can be determined by observing the particles themselves or particles appearing at a cross-section or the surface of the refractive index layer by electron microscopy, measuring the particle sizes of any 1000 particles, and calculating the simple mean value (number average). Here, the particle size of individual particles is represented by the diameter obtainable when a circle having an area equivalent to the projected area is assumed.

Regarding the method for producing the core-shell particles according to the present invention, any known method can be employed, and for example, reference can be made to Japanese Patent Application Laid-Open No. Hei10-158015, Japanese Patent Application Laid-Open No. 2000-053421, Japanese Patent Application Laid-Open No. 2000-063119, Japanese Patent Application Laid-Open No. 2000-204301, and Japanese Patent No. 4550753.

The silicon-containing hydrated oxide as used in the present specification may be any one of a hydrate of an inorganic silicon compound, or a hydrolysate and/or condensate of an organic silicon compound. In order to obtain the effects of the present invention, it is more preferable that the silicon-containing hydrated oxide has silanol groups.

In addition to the core-shell particles that are used in the high refractive index layer according to the present invention, the high refractive index layer may also contain other metal oxide particles. In the case of using the other metal oxide particles in combination, various ionic dispersants or protective agents can be used so as to prevent the metal oxide particles from electrostatically aggregating with the core-shell particles. Examples of the metal oxide particles that can be used in addition to the core-shell particles include particles of titanium dioxide, zirconium oxide, zinc oxide, synthetic amorphous silica, colloidal silica, alumina, colloidal alumina, lead titanate, red lead, yellow lead, zinc yellow, chromium oxide, ferric oxide, iron black, copper oxide, magnesium oxide, magnesium hydroxide, strontium titanate, yttrium oxide, niobium oxide, europium oxide, lanthanum oxide, zirconia, and tin oxide.

The core-shell particles according to the present invention may be core titanium oxide particles coated with a silicon-containing hydrated oxide over the entire surface, or may be core titanium oxide particles coated with a silicon-containing hydrated oxide over a portion of the surface.

(Curing agent)

According to the present invention, a curing agent can also be used in order to cure the first water-soluble binder resin. Regarding the curing agent that can be used together with the first water-soluble binder resin, there are no particular limitations as long as the curing agent is capable of causing a curing reaction with the relevant water-soluble binder resin. For example, when a polyvinyl alcohol is used as the first water-soluble binder resin, boric acid and salts thereof are preferred as the curing agent. In addition to the boric acid and salts thereof, known agents can be used, and generally, a compound having a group that is capable of reacting with a polyvinyl alcohol, or a compound that accelerates reactions between different groups carried by a polyvinyl alcohol is appropriately selected and used. Specific examples of the curing agent include epoxy-based curing agents (diglycidyl ethyl ether, ethylene glycol diglycidyl ether, 1,4-butanediol diglycidyl ether, 1,6-diglycidylcyclohexane, N,N-diglycidyl-4-glycidyloxyaniline, sorbitolpolyglycidyl ether, glycerol polyglycidyl ether, and the like), aldehyde-based curing agents (formaldehyde, glyoxal, and the like), activated halogen-based curing agents (2,4-dichloro-4-hydroxy-1,3,5,-s-triazine, and the like), activated vinyl-based compounds (1,3,5-trisacryloylhexahydro-s-triazine, bisvinylsulfonyl methyl ether, and the like), and aluminum alum.

Boric acid and salts thereof refer to an oxoacid having a boron atom as the central atom, and salts thereof. Specific examples include ortho-boric acid, diboric acid, metaboric acid, tetraboric acid, pentaboric acid, and octaboric acid, and salts thereof.

Boric acid and salts thereof containing boron atoms, as curing agents, may be used as aqueous solutions of single compounds, or as mixtures of two or more kinds thereof. Particularly preferred is a mixed aqueous solution of boric acid and borax.

Aqueous solutions of boric acid and borax can only be added respectively as relatively dilute aqueous solutions; however, when the two are mixed, a concentrated aqueous solution can be used. Thus, the coating liquid can be concentrated. Furthermore, there is an advantage that the pH of the aqueous solution to be added can be controlled relatively freely.

In the present invention, it is more preferable to use boric acid and salts thereof, and/or borax in order to obtain the effects of the present invention. It is contemplated that when boric acid and salts thereof, and/or borax is used, a hydrogen bonding network between metal oxide particles and OH groups of the polyvinyl alcohol as a water-soluble binder resin can be more easily formed, and consequently, interlayer mixing between a high refractive index layer and a low refractive index layer is suppressed so that preferable near-infrared barrier characteristics are achieved. Particularly, the effects can be exhibited more preferably when a set coating process of applying superposition of multiple layers of high refractive index layers and low refractive index layers using a coater, subsequently first cooling the film surface temperature of the coating film to about 15°C, and then drying the film surface, is used.

The content of the curing agent in the high refractive index layer is preferably 1% to 10% by mass, and more preferably 2% to 6% by mass, relative to 100% by mass of the solid content of the high refractive index layer.

Particularly, the total amount of use of the curing agent in the case of using a polyvinyl alcohol as the first water-soluble binder resin is preferably 1 to 600 mg per gram of the polyvinyl alcohol, and more preferably 100 to 600 mg per gram of the polyvinyl alcohol.

(Low refractive index layer)

The low refractive index layer according to the present invention contains a second water-soluble binder resin and second metal oxide particles as essential components, and may optionally further contain at least one selected from the group consisting of a curing agent, a surface coating component, a particle surface protective agent, a binder resin, a surfactant, and various additives.

The refractive index of the low refractive index layer according to the present invention is preferably 1.10 to 1.60, and more preferably 1.30 to 1.50.

(Second water-soluble binder resin)

As the second water-soluble binder resin according to the present invention, a polyvinyl alcohol is preferably used. Furthermore, it is more preferable that a polyvinyl alcohol (B) having a degree of saponification different from the degree of saponification of the polyvinyl alcohol (A) present in the high refractive index layer, is used in the low refractive index layer according to the present invention. Meanwhile, explanations on polyvinyl alcohols and the polyvinyl alcohol (B), such as a preferred weight average molecular weight of the second water-soluble binder resin, are described in the section for the first water-soluble binder resin, and thus, further explanation will not be given here.

The content of the second water-soluble binder resin in the low refractive index layer is preferably 20% to 99.9% by mass, and more preferably 25% to 80% by mass, relative to 100% by mass of the solid content of the low refractive index layer.

(Binder resin)

Regarding a water-soluble binder resin other than polyvinyl alcohol, which can be included in the low refractive index layer according to the present invention, any resin can be used without any limitation as long as the low refractive index layer containing second metal oxide particles can form a coating film. However, when environmental problems or flexibility of the coating film is considered, water-soluble polymers (particularly, gelatin, thickening polysaccharides, and polymers having reactive functional groups) are preferred. These water-soluble polymers may be used singly, or two or more kinds thereof may be used in combination.

In regard to the low refractive index layer, the content of another binder resin that is used in combination with the polyvinyl alcohol that is preferably used as the second water-soluble binder can be set to 0% to 10% by mass relative to 100% by mass of the solid content of the low refractive index layer.

The low refractive index layer of the optical film according to the present invention may also contain water-soluble polymers such as celluloses, thickening polysaccharides and polymers having reactive functional groups. Regarding these water-soluble polymers such as celluloses, thickening polysaccharides and polymers having reactive functional groups, since the same polymers as the water-soluble polymers described above for the high refractive index layer are used, further explanation will not be given here.

(Second metal oxide particles)

Regarding the second metal oxide particles according to the present invention, it is preferable to use silica (silicon dioxide), and specific examples thereof include synthetic amorphous silica and colloidal silica. Among these, it is more preferable to use an acidic colloidal silica sol, and it is even more preferable to use a colloidal silica sol dispersed in an organic solvent. Furthermore, in order to further decrease the refractive index, hollow fine particles having cavities in the interior of particles can be used as the second metal oxide particles, and particularly, hollow fine particles of silica (silicon dioxide) are preferred.

According to the present invention, the second metal oxide particles (preferably, silicon dioxide) preferably have an average particle size of 3 to 100 nm. The average particle size of primary particles of silicon dioxide that is dispersed in the form of primary particles (particle size in the state of a dispersion liquid before coating) is more preferably 3 to 50 nm, even more preferably 3 to 40 nm, particularly preferably 3 to 20 nm, and most preferably 4 to 10 nm. Furthermore, the average particle size of secondary particles is preferably 30 nm or less, from the viewpoint having a low haze value and excellent visible light transmissibility.

According to the present invention, the average particle size of the second metal oxide fine particles can be determined by observing the particles themselves or particles appearing at a cross-section or the surface of the refractive index layer by electron microscopy, measuring the particle sizes of any 1,000 particles, and calculating the simple mean value thereof (number average). Here, the particle size of individual particles is represented by the diameter obtainable when a circle having an area equivalent to the projected area is assumed.

The colloidal silica used in the present invention is obtainable by double decomposition of sodium silicate by an acid or the like, or by heating and aging a silica sol obtainable by passing through an ion-exchange resin bed. Examples thereof include the colloidal silicas described in Japanese Patent Application Laid-Open No. Sho57-14091, Japanese Patent Application Laid-Open No. Sho60-219083, Japanese Patent Application Laid-Open No. Sho60-219084, Japanese Patent Application Laid-Open No. Sho61-20792, Japanese Patent Application Laid-Open No. Sho61-188183, Japanese Patent Application Laid-Open No. Sho63-17807, Japanese Patent Application Laid-Open No. Hei4-93284, Japanese Patent Application Laid-Open No. Hei5-278324, Japanese Patent Application Laid-Open No. Hei6-92011, Japanese Patent Application Laid-Open No. Hei6-183134, Japanese Patent Application Laid-Open No. Hei6-297830, Japanese Patent Application Laid-Open No. Hei7-81214, Japanese Patent Application Laid-Open No. Hei7-101142, Japanese Patent Application Laid-Open No. Hei7-179029, Japanese Patent Application Laid-Open No. Hei7-137431, and WO 94/26530.

For such colloidal silica, synthetic products may be used, or commercially available products may be used. Colloidal silica may be a product having the surface cationically modified, or may be a product treated with Al, Ca, Mg, Ba or the like.

In the present invention, hollow particles can be as the second metal oxide particles. In the case of using hollow particles, the average particle hole diameter is preferably 3 to 70 nm, more preferably 5 to 50 nm, and even more preferably 5 to 45 nm. Meanwhile, the average particle hole diameter of hollow particles is the average value of the inner diameters of hollow particles. According to the present invention, when the average particle hole diameter of the hollow particles is in the range described above, the refractive index of the low refractive index layer is made sufficiently low. The average particle hole diameter is obtained by randomly observing 50 or more hole diameters that can be observed as a circular shape, an elliptical shape, or a substantially circular or elliptical shape, determining the hole diameters of the various particles, and determining the number average value thereof. Meanwhile, in the present specification, the average particle hole diameter means the smallest distance among the distances spanning between two parallel lines that touch the outer circumference of a hole diameter that can be observed as a circular shape, an elliptical shape or a substantially circular or elliptical shape.

The second metal oxide particles according to the present invention may be surface coated with a surface coating component. Particularly, when metal oxide particles that are not in a core-shell form are used as the first metal oxide particles according to the present invention, if the surface of the second metal oxide particles is coated with a surface coating component such as polyaluminum chloride, the second metal oxide particles do not easily aggregate with the first metal oxide particles.

The content of the second metal oxide particles in the low refractive index layer is preferably 0.1% to 70% by mass, more preferably 30% to 70% by mass, and even more preferably 45% to 65% by mass, relative to 100% by mass of the solid content of the low refractive index layer.

(Curing agent)

The low refractive index layer according to the present invention may further contain a curing agent, as in the case of the high refractive index layer. The curing agent is not particularly limited as long as the agent induces a curing reaction with the second water-soluble binder resin contained in the low refractive index layer. Particularly, the curing agent in the case of using a polyvinyl alcohol as the second water-soluble binder resin is preferably boric acid and salts thereof, and/or borax. Furthermore, in addition to boric acid salts thereof, any known curing agents can be used.

The content of the curing agent in the low refractive index layer is preferably 1% to 10% by mass, and more preferably 2% to 6% by mass, relative to 100% by mass of the solid content of the low refractive index layer.

Particularly, the total amount of use of the curing agent in the case of using a polyvinyl alcohol as the second water-soluble binder resin is preferably 1 to 600 mg per gram of the polyvinyl alcohol, and more preferably 100 to 600 mg per gram of the polyvinyl alcohol.

Specific examples of the curing agent and the like are the same as those for the high refractive index layer as described above, and therefore, further explanation will not be given here.

In the high refractive index layer and the low refractive index layer according to the present invention, various additives can be used as necessary. Furthermore, the content of the additives in the high refractive index layer is preferably 0% to 20% by mass relative to 100% by mass of the solid content of the high refractive index layer . Examples of the relevant additives will be described below.

(Surfactant)

According to the present invention, at least one layer of the high refractive index layer and the low refractive index layer may further contain a surfactant. Regarding the surfactant, any kind of amphoteric surfactants, cationic surfactants, anionic surfactants and nonionic surfactants can be used. More preferably, a betaine-based amphoteric surfactant, a quaternary ammonium salt-based cationic surfactant, a dialkylsulfosuccinic acid salt-based anionic surfactant, an acetylene glycol-based nonionic surfactant, or a fluorine-based cationic surfactant is preferred.

The amount of addition of the surfactant according to the present invention is preferably in the range of 0.005% to 0.30% by mass, and more preferably 0.01% to 0.10% by mass, when the total mass of the coating liquid for high refractive index layer or the coating liquid for low refractive index layer is designated as 100% by mass.

(Amino acid)

The high refractive index layer or low refractive index layer according to the present invention may contain an amino acid having an isoelectric point of 6.5 or less. When an amino acid is included, dispersibility of the metal oxide particles in the high refractive index layer or the low refractive index layer can be enhanced.

The amino acid as used herein means a compound having an amino group and a carboxyl group in the same molecule, and an amino acid of any type such as $\alpha$-type, $\beta$-type or $\gamma$-type may be used. Some amino acids have optical isomers; however, in regard to the present invention, there is no difference in the effects caused by optical isomers, and any of the isomers can be used singly or as racemates.

For detailed explanations on amino acids, reference can be made to the descriptions of Kagaku Daijiten (Encyclopedia of Chemistry) 1 Compact Edition (Kyoritsu Shuppan Co., Ltd.; published in 1960), pp. 268-270.

Specific preferred examples of the amino acid include aspartic acid, glutamic acid, glycine, and serine, and particularly, glycine and serine are preferred.

In regard to the isoelectric point of an amino acid, an amino acid has its positive charge and negative charge in the molecule balanced with each other at a particular pH, and the overall charge becomes zero (0). The isoelectric point refers to this pH value. The isoelectric points of various amino acids can be determined by isoelectric point electrophoresis at a low ionic strength.

(Emulsion resin)

The high refractive index layer or the low refractive index layer according to the present invention may further contain an emulsion resin. When the refractive index layer contains an emulsion resin, flexibility of the film is increased, and processability such as pasting to glass is improved.

An emulsion resin is a resin in which fine resin particles, for example, resin particles having an average particle size of about 0.01 to 2.0 $\mu$m, are dispersed in an emulsion state in a water-based medium, and is obtained by emulsion polymerizing an oil-soluble monomer using a polymeric dispersant having hydroxyl groups. There is no essential difference observed in the polymer component of an emulsion resin thus obtainable, by varying the kind of the dispersant used. Examples of the dispersant used at the time of polymerization of the emulsion include low molecular weight dispersants such as alkylsulfonic acid salts, alkylbenzenesulfonic acid salts, diethylamine, ethylenediamine, and quaternary ammonium salts; as well as polymeric dispersants such as polyoxyethylene nonyl phenyl ether, polyhexyethylene lauric acid ether, hydroxyethyl cellulose, and polyvinylpyrrolidone. When emulsion polymerization is carried out using a polymeric dispersant having hydroxyl groups, it is assumed that hydroxyl groups are present at least on the surface of fine particles, and the emulsion resin has chemical and physical properties of emulsion that are different from those of emulsion resins polymerized using other dispersants.

A polymeric dispersant containing hydroxyl groups is a high molecular weight dispersant having a weight average molecular weight of 10, 000 or more and having hydroxyl groups substituted in side chains or at the chain ends. Examples thereof include a product in which 2-ethylhexyl acrylate is copolymerized with an acrylic polymer such as polyacrylic acid sodium or polyacrylamide; and a polyether such as polyethylene glycol or polypropylene glycol.

(Lithium compound)

According to the present invention, at least one layer of the high refractive index layer and the low refractive index layer may further contain a lithium compound. In a coating liquid for high refractive index layer or a coating liquid for low refractive index layer, which both contain the lithium compound, the control of viscosity is made easier, and as a result, production stability at the time of applying the optical film of the present invention to glass plates is further enhanced.

There are no particular limitations on the lithium compound that can be applied to the present invention, and examples thereof include lithium carbonate, lithium sulfate, lithium nitrate, lithium acetate, lithium orotate, lithium citrate, lithiummolybdate, lithium chloride, lithiumhydride, lithium hydroxide, lithiumbromide, lithiumfluoride, lithium iodide, lithium stearate, lithium phosphate, lithium hexafluorophosphate, lithium aluminum hydride, lithium triethylborohydride, lithium aluminum triethoxyhydride, lithium tantalate, lithium hypochlorate, lithium oxide, lithium carbide, lithium nitride, lithium niobate, lithium sulfide, lithium borate, $LiBF_4$, $LiClO_4$, $LiPF_4$, and $LiCF_3SO_3$. These lithium compounds can be used singly or in combination of two or more kinds thereof.

Among these, lithium hydroxide is preferred from the viewpoint of being able to sufficiently exhibit the effects of the present invention.

The amount of addition of the lithium compound is preferably in the range of 0.005 to 0.05 g, and more preferably 0.01 to 0.03 g, per gram of the metal oxide particles present in the refractive index layer.

(Other additives)

Various additives that can be applied to the high refractive index and the low refractive index according to the present invention will be listed below. Examples thereof include various known additives, including the ultraviolet absorbers described in Japanese Patent Application Laid-Open No. Sho57-74193, Japanese Patent Application Laid-Open No. Sho57-87988, and Japanese Patent Application Laid-Open No. Sho62-261476; the discoloration inhibitors described in Japanese Patent Application Laid-Open No. Sho57-74192, Japanese Patent Application Laid-Open No. Sho57-87989, Japanese Patent Application Laid-Open No. Sho60-72785, Japanese Patent Application Laid-Open No. Sho61-146591, Japanese Patent Application Laid-Open No. Hei1-95091, and Japanese Patent Application Laid-Open No. Hei3-13376; various anionic, cationic or nonionic surfactants; the fluorescent brightening agents described in Japanese Patent Application Laid-Open No. Sho59-42993, Japanese Patent Application Laid-Open No. Sho59-52689, Japanese Patent Application Laid-Open No. Sho62-280069, Japanese Patent Application Laid-Open No. Sho61-242871, and Japanese Patent Application Laid-Open No. Hei4-219266; pH adjusting agents such as sulfuric acid, phosphoric acid, acetic acid, citric acid, sodium hydroxide, potassium hydroxide, and potassium carbonate; defoamants; lubricating agents such as diethylene glycol; antiseptics, antifungal agents, antistatic agents, mattifying agents, thermal stabilizers, oxidation inhibitors, flame retardants, crystal nucleating agents, inorganic particles, organic particles, viscosity reducing agents, lubricating agents, infrared absorbers, colorants, and pigments.

<Method for forming infrared reflecting layer>

The method for forming the infrared reflecting layer according to the present invention is not particularly limited; however, a production method including a step of applying a coating liquid for high refractive index layer containing a first water-soluble binder resin and first metal oxide particles, and a coating liquid for low refractive index layer containing a second water-soluble binder resin and second metal oxide particles, is preferred.

The coating method is not particularly limited, and examples thereof include a roll coating method, a rod bar coating method, an air knife coating method, a spray coating method, a slide type curtain coating method, and the slide hopper coating method described in US Patent No. 2,761,419, US Patent No. 2, 761, 791 and the like, and an extrusion coating method. Furthermore, the method for applying plural layers in superposition may be coating by sequential superposition, or may be coating by simultaneous superposition.

Hereinbelow, coating by simultaneous superposition according to a slide hopper coating method, which is a preferred production method (coating method) of the present invention, will be described in detail.

(Solvent)

There are no particular limitations on the solvent for preparing the coating liquid for high refractive index layer and the coating liquid for low refractive index layer, but water, an organic solvent, or a mixed solvent thereof is preferred.

Examples of the organic solvent include alcohols such as methanol, ethanol, 2-propanol, and 1-butanol; esters such as ethyl acetate, butyl acetate, propylene glycol monomethyl ether acetate, and propylene glycol monoethyl ether acetate; ethers such as diethyl ether, propylene glycol monomethyl ether, and ethylene glycol monoethyl ether; amides such as dimethylformamide and N-methylpyrrolidone; and ketones such as acetone, methyl ethyl ketone, acetylacetone, and cyclohexanone. These organic solvents may be used singly or as mixtures of two or more kinds thereof.

In view of environmental aspects, convenience of operation and the like, the solvent of the coating liquid is particularly preferably water, or a mixed solvent of water and methanol, ethanol or ethyl acetate.

(Concentration of coating liquid)

The concentration of the first water-soluble binder resin in the coating liquid for high refractive index layer is preferably 1% to 10% by mass. The concentration of the first metal oxide particles in the coating liquid for high refractive index layer is preferably 1% to 50% by mass.

The concentration of the second water-soluble binder resin in the coating liquid for low refractive index layer is preferably 1% to 10% by mass. Furthermore, the concentration of the second metal oxide particles in the coating liquid for low refractive index layer is preferably 1% to 50% by mass.

(Method for preparing coating liquid)

The method for preparing the coating liquid for high refractive index layer and the coating liquid for low refractive index is not particularly limited, and for example, a method of adding a water-soluble binder resin, metal oxide particles, and other additives that are added as necessary, and mixing with stirring the components may be used. At this time, there are no particular limitations on the order of addition of the water-soluble binder resin, the metal oxide particles, and the other additives that are used as necessary, and the various components may be sequentially added and mixed while stirred, or the various components may be added all at once and mixed while stirred. If necessary, the mixture is prepared to have appropriate viscosity by further using a solvent.

According to the present invention, it is preferable to form a high refractive index layer using a water-based coating liquid for high refractive index layer that has been prepared by adding and dispersing core-shell particles. At this time, it is preferable to prepare the coating liquid by adding the core-shell particles in the form of a sol having a pH of from 5.0 to 7.5 and a negative zeta potential of the particles, to the coating liquid for high refractive index layer.

(Viscosity of coating liquid)

The viscosity at 40°C to 45°C of the coating liquid for high refractive index layer and the coating liquid for low refractive index layer at the time of performing coating by simultaneous superposition by a slide hopper coating method, is preferably in the range of 5 to150 mPa·s, and more preferably in the range of 10 to 100 mPa·s. Furthermore, the viscosity at 40°C to 45°C of the coating liquid for high refractive index layer and the coating liquid for low refractive index layer at the time of performing coating by simultaneous superposition by a slide type curtain coating method, is preferably in the range of 5 to 1200 mPa·s, and more preferably in the range of 25 to 500 mPa·s.

Furthermore, the viscosity at 15°C of the coating liquid for high refractive index layer and the coating liquid for low refractive index layer is preferably 100 mPa·s or more, more preferably 100 to 30,000 mPa·s, even more preferably 3,000 to 30,000 mPa·s, and particularly preferably 10,000 to 30,000 mPa·s.

(Method for coating and drying)

There are no particular limitations on the method for coating and drying; however, it is preferable to carry out the method by heating the coating liquid for high refractive index layer and the coating liquid for low refractive index layer to 30°C or higher, performing coating by simultaneous superposition of the coating liquid for high refractive index layer and the low refractive index layer on a base material, subsequently first cooling the temperature of the coating film thus formed to preferably 1°C to 15°C (setting), and then drying the coating film at or above 10°C. More preferred drying conditions are conditions including a wet bulb temperature of 5°C to 50°C and a film surface temperature of 10°C to 50°C. Furthermore, regarding the cooling mode immediately after coating, it is preferable to perform cooling in a horizontal setting mode, from the viewpoint of enhancing uniformity of the coating film thus formed.

Regarding the coating thicknesses of the coating liquid for high refractive index layer and the coating liquid for low refractive index layer, the coating liquids may be applied to obtain the preferred thickness upon drying as described above.

Here, the term setting means a process of increasing the viscosity of a coating film composition by means of lowering the temperature by blowing cold air to the coating film or the like, and thereby decreasing fluidity of the materials between various layers and within various layers. A state in which when cold air is blown against the surface of a coating film, and a finger is pressed against the surface of the coating film, nothing sticks to the finger, is defined as a completely set state.

After coating, the time taken until setting is completed after cold air is blown (setting time) is preferably 5 minutes or less, and preferably 2 minutes or less. Furthermore, the lower limit of the time is not particularly limited, but it is preferable to take a time of 45 seconds or longer. If the setting time is too short, there is a risk that mixing of the components in the layer may not sufficiently occur. On the other hand, if the setting time is too long, there is a risk that interlayer diffusion of metal oxide particles may progress, and the difference in the refractive index between the high refractive index layer and the low refractive index layer may be insufficient. In addition, if an increase of elasticity occurs rapidly in the intermediate layer between a high refractive index layer and a low refractive index layer, the process for setting may not be provided.

Adjusting of the setting time can be achieved by adjusting the concentration of the water-soluble binder resin or the concentration of the metal oxide particles, or by adding other components, including various known gelling agents such as gelatin, pectin, agar, carrageenan, and gellan gum.

The temperature of the cold air is preferably 0°C to 25°C, and more preferably 5°C to 10°C. Furthermore, the time for the coating film to be exposed to cold air may vary depending on the transportation rate of the coating film, but the time is preferably 10 to 120 seconds.

The optical film according to the present invention, may include, for the purpose of adding new functions, on the outermost surface lower to the transparent resin film or opposite to the transparent resin film, one or more functional layers such as a conductive layer, an antistatic layer, a gas barrier layer, an easily adhesive layer (adhesive layer), an antifouling layer, a deodorizing layer, a dripping layer, an easily lubricating layer, a hard coat layer, an abrasion resistant layer, an antireflective layer, an electromagnetic wave shielding layer, an ultraviolet absorbing layer, an infrared absorbing layer, a printed layer, a fluorescence emitting layer, a hologram layer, a releasable layer, a tacky adhesive layer, an adhesive layer, an infrared cutting layer other than the high refractive index layer and the low refractive index layer of the present invention (a metal layer, a liquid crystal layer), and a colored layer (visible light absorbing layer). Hereinbelow, an infrared absorbing layer, a heat-insulating layer, a hard coat layer, and a tacky adhesive layer, which are preferred functional layers, will be explained.

<Infrared absorbing layer>

The optical film according to the present invention may further include an infrared absorbing layer. This infrared absorbing layer is laminated at any arbitrary position; however, in order to obtain the heat-shielding effect of the laminated glass of the present invention more efficiently, it is preferable that the infrared absorbing layer is laminated lower to the infrared reflecting layer as viewed from the light incident side, and it is more preferable that the infrared absorbing layer is laminated on the surface of the transparent resin film which is opposite to the surface where the infrared reflecting layer is laminated. Furthermore, even when an infrared absorber is incorporated into other layers, for example, a hard coat layer, the layer functions as an infrared absorbing layer.

The thickness per layer of the infrared absorbing layer according to the present invention is preferably 0.1 to 50 $\mu$m, and more preferably 1 to 20 $\mu$m. When the thickness is 0.1 $\mu$m or more, the infrared absorbing ability tends to be enhanced, and when the thickness is 50 $\mu$m or less, cracking resistance of the coating film is enhanced.

The material that is included in the infrared absorbing layer is not particularly limited, but examples thereof include an ultraviolet-curable resin, a photopolymerization initiator, and an infrared absorber.

The ultraviolet-curable resin has superior hardness and smoothness compared to other resins, and is also advantageous from the viewpoint of the dispersibility of ITO, antimony-doped tin oxide (ATO), or a heat conductive metal oxide. Regarding the ultraviolet-curable resin, any resin capable of forming a transparent layer by curing can be used without any particular limitation, and examples thereof include a silicone resin, an epoxy resin, a vinyl ester resin, an acrylic resin, and an allyl ester resin. More preferred is an acrylic resin from the viewpoints of hardness, smoothness, and transparency.

It is preferable for the acrylic resin to include reactive silica particles having photosensitive groups with photopolymerization reactivity introduced on the surface (hereinafter, also simply referred to as "reactive silica particles"), which are described in WO 2008/035669, from the viewpoints of hardness, smoothness, and transparency. Here, examples of a photosensitive group having photopolymerizability include polymerizable unsaturated groups, which are represented by a (meth)acryloyloxy group. Furthermore, the ultraviolet-curable resin may also include a compound capable of photopolymerization reaction with this photosensitive group having photopolymerization reactivity that has been introduced onto the surface of the reactive silica particles, for example, an organic compound having a polymerizable unsaturated group. Furthermore, silica particles in which a polymerizable unsaturated group-modified hydrolysable silane produces a silyloxy group between silica particles by a hydrolysis reaction of a hydrolysable silyl group and is thereby chemically bonded to the silica particles, can be used as the reactive silica particles. Here, the average particle size of the reactive silica particles is preferably 0.001 to 0.1 $\mu$m. When the average particle size is adjusted to such a range, transparency, smoothness and hardness can be satisfied in a well-balanced manner.

Furthermore, the acrylic resin may contain a constituent unit derived from a fluorine-containing vinyl monomer, from the viewpoint of adjusting the refractive index. Examples of the fluorine-containing vinyl monomer include fluoroolefins (for example, fluoroethylene, vinylidene fluoride, tetrafluoroethylene, and hexafluoropropylene), partially or completely fluorinated alkyl ester derivatives of (meth) acrylic acid (for example, VISCOAT 6FM (trade name, manufactured by Osaka Organic Chemical Industry, Ltd.) and R-2020 (trade name, manufactured by Daikin Industries, Ltd.)), and completely or partially fluorinated vinyl ethers.

Regarding the photopolymerization initiator, any known agents can be used, and the compounds can be used singly or in combination of two or more kinds thereof.

The inorganic infrared absorber that can be included in the infrared absorbing layer is preferably tin-doped indium oxide (ITO), antimony-doped tin oxide (ATO), zinc antimonate, lanthanum hexafluoride ($LaB_6$), cesium-containing tungsten oxide ($Cs_{0.33}WO_3$), or the like, from the viewpoints of visible light transmittance, infrared absorptivity, dispersion suitability in a resin, and the like. These can be used singly, or in combination of two or more kinds thereof. The average particle size of the inorganic infrared absorber is preferably 5 to 100 nm, and more preferably 10 to 50 nm. If the average particle size is less than 5 nm, there is a risk that dispersibility in a resin or infrared absorptivity may be decreased. On the other hand, if the average particle size is larger than 100 nm, there is a risk that the visible light transmittance may be decreased. Meanwhile, measurement of the average particle size is carried out by taking images by transmission electron microscopy, randomly extracting, for example, fifty particles, measuring the particle sizes thereof, and calculating the average of these particle sizes. Furthermore, when the shape of the particles is not a spherical shape, the particle size is defined as a value obtained by measuring the major axis and calculating an average.

The content of the inorganic infrared absorber in the infrared absorbing layer is preferably 1% to 80% by mass, and more preferably 1% to 50% by mass, relative to the total mass of the infrared absorbing layer. When the content is 1% by mass or more, a sufficient infrared absorbing effect is exhibited, and when the content is 80% by mass or less, a sufficient amount of visible light can be transmitted.

The infrared absorbing layer may include metal oxides other than those described above, or other infrared absorbers such as an organic infrared absorber and a metal complex, to the extent that the effects of the present invention are provided. Specific examples of these other infrared absorbers include, for example, a diimmonium-based compound, an aluminum-based compound, a phthalocyanine-based compound, an organic metal complex, a cyanine-based compound, an azo compound, a polymethine-based compound, a quinone-based compound, a diphenylmethane-based compound, and a triphenylmethane-based compound.

The method for forming the infrared absorbing layer is not particularly limited, and for example, a method of preparing a coating liquid for infrared absorbing layer containing the above-described various components, subsequently applying the coating liquid using a wire bar or the like, and drying the coating liquid, may be used.

<Heat-insulating layer>

According to the present invention, a heat-insulating layer having pores (hereinafter, also simply referred to as a heat-insulating layer) may be provided on any one side of the transparent resin film. When a heat-insulating layer is provided, the risk of so-called thermal cracks can be reduced. Furthermore, the heat-shielding effect of the laminated glass of the present invention can be further enhanced.

The heat-insulating layer according to the present invention preferably has a thermal conductivity of 0.001 to 0.2 W/(m·K), and more preferably 0.005 to 0.15 W/(m·K). When the thermal conductivity is 0.001 W/(m·K) or more, slight heat transfer and heat diffusion occurs, and damages such as swelling, peeling and discoloration of films do not occur easily. Furthermore, when the thermal conductivity is 0.2 W/(m·K) or less, heat transfer and heat diffusion can be suppressed, heat conduction to glass is suppressed effectively, and thermal cracks in glass do not occur easily.

The thermal conductivity can be measured, for example using a hot wire probe type thermal conductivity analyzer (manufactured by Kyoto Electronics Manufacturing Co., Ltd., QTM-500).

Porosity of the heat-insulating layer according to the present invention is preferably 30% to 95%, and more preferably 60% to 95%. When the porosity is 30% or more, heat-insulating performance is exhibited, and thermal cracks in glass do not easily occur. Furthermore, when porosity is 95% or less, layer structure strength can be maintained to the extent that the structure is not destroyed even during handling.

The porosity (A) can be calculated by the following formula, from the density (B) obtainable from the volume and mass of the heat-insulating layer, and the density (C) of the material itself that constitutes the heat-insulating layer.

$$[\text{Math. 3}]$$

$$A = ((C - B)/C) \times 100$$

Meanwhile, when two or more kinds of materials constitute the heat-insulating layer, the density (C) of the material itself is calculated by weighted average from the mixing ratio and densities of the respective materials.

The material that forms the heat-insulating layer is not particularly limited, but examples thereof include a combination of inorganic oxide particles and a polymer binder, and a foamed resin.

Regarding the inorganic oxide particles, any known material can be used. Specific examples include silica ($SiO_2$), alumina ($Al_2O_3$), zirconium oxide ($ZrO_2$), zeolite, titanium oxide ($TiO_2$), barium titanate ($BaTiO_3$), strontium titanate ($SrTiO_3$), calcium titanate ($CaTiO_3$), aluminum borate, iron oxide, calcium carbonate, barium carbonate, lead oxide, tin oxide, cerium oxide, calcium oxide, trimanganese tetroxide, magnesium oxide, niobium oxide, tantalum oxide, tungsten oxide, antimony oxide, aluminum phosphate, calcium silicate, zirconium silicate, ITO, titanium silicate, mesoporous silica (FSM-16, MCM41, and the like), montmorillonite, saponite, vermiculite, hydrotalcite, kaolinite, kanemite, illite, magadiite, and kenyaite. These can be used singly or in combination of two or more kinds thereof. Furthermore, composite oxides of these can also be preferably used. Among these, neutral to acidic inorganic oxide particles are preferred from the viewpoint of the strength of the heat-insulating layer. Specifically, zirconium oxide, montmorillonite, saponite, vermiculite, hydrotalcite, kaolinite, kanemite, tin oxide, tungsten oxide, titanium oxide, aluminum phosphate, silica, zinc oxide, and alumina are preferred, and more preferred are silica particles or alumina particles. Silica particles and alumina particles are industrially easily available at low cost, and these particles can have the surface modified relatively easily with crosslinkable functional groups, in order to have reaction-active hydroxyl groups on the surface.

The inorganic oxide particles may be particles having porosity. The inorganic oxide particles having porosity are inorganic oxide particles having numerous fine pores at the surface of the particles or in the interior thereof, and the specific surface area of the particles is preferably 500 to 1000 $m^2/g$. When the specific surface area is 500 $m^2/g$ or more, the void ratio is increased, and thus heat-insulating properties tend to be enhanced. Furthermore, when the specific surface area is 1000 $m^2/g$ or less, the film strength of the heat-insulating layer tends to increase. The specific surface area can be measured by a conventional mercury press-in method or gas adsorption method (BET method), and according to the present invention, the BET method can be suitably utilized. The BET method is a method of adsorbing molecules (for example, $N_2$) whose adsorption occupation area is known to particle surfaces at the temperature of liquid nitrogen, and determining the specific surface area of a sample from the amount of adsorption. Furthermore, regarding the pore size that serves as another indicator of porosity, it is preferable to have the pore size in the meso region. The meso region is a region of 2 to 50 nm, to which Kelvin's capillary condensation theory is applicable. The pore size can be measured as the median diameter of a pore distribution calculated by analyzing the hysteresis pattern of adsorption and desorption isothermal curves obtained by a gas adsorption method using a pore size distribution analyzer, or can be measured by making observation by transmission electron microscopy (TEM).

Regarding such inorganic oxide particles having porosity, for example, nanometer-sized composite oxide fine particles having a low refractive index, in which the surface of porous inorganic oxide particles with silica or the like, as described in Japanese Patent Application Laid-Open No. Hei7-133105; and nanometer-sized silica-based fine particles having a cavity in the interior and having a low refractive index, which are formed from silica and an inorganic oxide other than silica, as described in Japanese Patent Application Laid-Open No. 2001-233611; and the like are also suitable.

The average particle size of the inorganic oxide particles is preferably 1 nm to 200 nm. When the average particle size is 1 nm or more, the void ratio is increased, and the heat-insulating properties tend to be enhanced. When the average particle size is 200 nm or less, the film strength of the heat-insulating layer tends to be enhanced.

Furthermore, the inorganic oxide particles included in the heat-insulating layer may be hollow particles from the viewpoint that the pore size of the pores or the thickness of the outer wall of the heat-insulating layer structure can be easily controlled. The hollow particles thus used may be obtained by a method of coating the surface of a template with an inorganic oxide using a sol-gel solution of a metal alkoxide, a silane coupling agent or the like, in which a template of inorganic nanoparticles having a predetermined particle size is dispersed, or a reactive resin monomer solution, and then dissolving the template in the inside to make the particles hollow. The hollow particles may be not only particles having the outer wall entirely closed, but also particles having a structure in which a portion of the outer wall is open. Also, regarding the material used for the outer wall, silica, metal oxides, organic resin materials and the like can be used without limitation; however, it is preferable to use silica or a silane coupling agent that forms organically modified silica, in order to secure the mechanical strength of the heat-insulating layer.

The average cavity size of the hollow particles is preferably 80 nm or less, and more preferably 50 nm or less, in order to secure the heat-insulating properties and transparency. Furthermore, the average thickness of the outer wall is preferably 1 to 7 nm, and more preferably 1 to 5 nm. When the thickness of the outer wall is 7 nm or less, transparency of the heat-insulating layer tends to increase, and when the thickness is 1 nm or more, the mechanical strength of the heat-insulating layer tends to increase.

The average particle size of these inorganic oxide particles is a volume average value of the diameter when various particles are assumed to be spheres having an identical volume (sphere-converted particle size), and this value can be determined by observation by electron microscopy. That is, the average particle size is a value obtained by measuring 200 or more inorganic oxide fine particles that are available in a certain viewing field by electron microscopic observation of the inorganic oxide particles, determining the sphere-converted particle sizes of the respective particles, and determining the average value thereof.

For the inorganic oxide particles of the present invention, particles that have been surface-modified with a silane coupling agent or the like on the particle surface can also be used. The surface modifying group is not particularly limited, but a crosslinkable functional group capable of crosslinking with a nitrogen-containing aromatic polymer having crosslinkable functional groups at the chain ends is preferably used. Here, examples of the crosslinkable functional group include groups having a carbon-carbon unsaturated bond, such as a vinyl group, an acryl group, a methacryl group, and an allyl group; cyclic ether groups such as an epoxy group and an oxetane group; an isocyanate group, a hydroxyl group, and a carboxyl group.

Regarding the method of providing a crosslinkable functional group on the surface of inorganic oxide particles (surface modification method), a method of allowing a silane compound having the crosslinkable functional group to react with the surface of the inorganic oxide particles is preferably used. Examples of the silane compound having a crosslinkable functional group include monofunctional to trifunctional alkoxysilanes, a chlorosilane compound having a crosslinkable functional group, and a disilazane compound having a crosslinkable functional group.

More specifically, examples of the method for surface modification include a dry method of directly spraying a silane compound having the crosslinkable functional group on inorganic oxide particles, and heating the particles to fix the silane compound thereto; and a wet method of dispersing inorganic oxide particles in a solution, adding a silane compound having the crosslinkable functional group, and thereby surface treating the inorganic oxide particles. However, a wet method that allows inorganic oxide particles to be dispersed more uniformly is preferred. For instance, when surface modification is carried out by the technique described in Japanese Patent Application Laid-Open No. 2007-264581, the inorganic oxide particles acquire high dispersibility, and therefore, the technique is suitable for the present invention. Also, for both the dry method and the wet method, a reaction with a silane compound having a per forced functional group can be accelerated by treating the inorganic oxide particles in advance with hot water.

The content of the inorganic oxide particles in the heat-insulating layer is not particularly limited, but the content is preferably 10% to 95% by mass, and more preferably 50% to 90% by mass, relative to the total mass of the heat-insulating layer. When the content is 10% by mass or more, the void ratio is increased, and the heat-insulating properties tend to be enhanced. When the content is 95% by mass or less, the mechanical strength of the heat-insulating layer tends to increase.

When the heat-insulating layer contains inorganic oxide particles, it is preferable for the heat-insulating layer to contain a small amount of a polymer binder, from the viewpoint of flexibility of the coating film and from the viewpoint of pore formation.

Examples of the polymer binder include thermoplastic resins and polymers having rubber elasticity. Specific examples thereof include water-soluble polymers such as starch, carboxymethyl cellulose, cellulose, diacetyl cellulose, methyl cellulose, hydroxyethyl cellulose, hydroxypropyl cellulose, sodium alginate, polyacrylic acid, polysodium acrylate, polyvinylphenol, polyvinyl methyl ether, polyvinyl alcohol, polyvinylpyrrolidone, polyacrylonitrile, polyacrylamide, polyhydroxy (meth)acrylate, and styrene-maleic acid copolymers; and emulsion (latex) or suspension of polyvinyl chloride, polytetrafluoroethylene, polyvinylidene fluoride, tetrafluoroethylene-hexafluoropropylene copolymer, vinylidene fluoride-tetrafluoroethylene hexafluoropropylene copolymer, polyethylene, polypropylene, ethylene-propylene-diene terpolymer (EPDM), sulfonated EPDM, a polyvinyl acetal resin, (meth) acrylic acid ester copolymers containing (meth)acrylic acid esters such as methyl methacrylate and 2-ethylhexyl acrylate, (meth)acrylic acid ester-acrylonitrile copolymer, polyvinyl ester copolymers containing vinyl esters such as vinyl acetate, styrene-butadiene copolymer, acrylonitrile-butadiene copolymer, polybutadiene, neoprene rubber, fluorine rubber, polyethylene oxide, a polyester polyurethane resin, a polyether polyurethane resin, a polycarbonate polyurethane resin, a polyester resin, a phenolic resin, and an epoxy resin. Among them, water-soluble polymers are preferred, and polyvinyl alcohol is more preferably used.

The content of these polymer binders is not particularly limited, but the content is preferably 5% to 90% by mass, and more preferably 10% to 50% by mass, relative to the total mass of the heat-insulating layer. When the content is 5% by mass or more, flexibility of the heat-insulating layer tends to increase, and when the content is 90% by mass or less, porosity can be obtained, and a heat-insulating layer having higher heat-insulating properties can be formed.

Examples of the foamed resin used as the material of the heat-insulating layer include, for example, foams of polyolefins such as polyurethane, polystyrene, polyethylene, and polypropylene; a phenolic resin, polyvinyl chloride, a urea resin, polyimide, and a melamine resin. These can be used singly or in combination of two or more kinds thereof. Among these, from the viewpoint of moldability, formed polystyrene or foamed polyurethane is preferred.

Furthermore, in the heat-insulating layer, a crosslinking agent may also be used from the viewpoint of further increasing the film strength.

Crosslinking agents are roughly classified into inorganic agents and organic agents, but all of them can give a sufficient effect for the present invention. These crosslinking agents can be used singly or in combination of two or more kinds.

Examples of the inorganic crosslinking agents that are used include, for example, acids having boron atoms (boric acid, ortho-boric acid, diboric acid, metaboric acid, tetraboric acid, pentaboric acid, and the like) or salts thereof, zinc salts (zinc sulfate, and the like), copper salts (copper sulfate, and the like), zirconium salts (zirconyl nitrate, zirconyl acetate, and the like), aluminum salts (aluminum sulfate and the like), and titanium salts (titanium lactate and the like). Among these, preferred inorganic crosslinking agents are acids having boron atoms or salts thereof, aluminum salts, and zirconium salts, and more preferred are zirconium salts.

Furthermore, examples of the organic crosslinking agents include aldehyde-based crosslinking agents (formalin, glyoxal, dialdehyde starch, polyacrolein, N-methylolurea, N-methylolmelamine, N-hydroxylmethylphthalimide, and the like), active vinyl-based crosslinking agents (bisvinylsulfonylmethylmethane, tetrakisvinylsulfonylmethylmethane, N,N,N-trisacryloyl-1,3,5-hexahydrotriazine, and the like), epoxy-based crosslinking agents, and polyisocyanate-based crosslinking agents. Among these, preferred examples include polyisocyanate-based crosslinking agents, epoxy-based crosslinking agents, and aldehyde-based crosslinking agents, and more preferred are polyisocyanate-based crosslinking agents and epoxy-based curing agents that exhibit satisfactory reaction with hydroxyl groups.

An epoxy-based crosslinking agent is a compound having at least two glycidyl groups in the molecule, and for example, numerous crosslinking agents are commercially available under the trade name of DENACOL (registered trademark) from Nagase ChemteX Corp.

A polyisocyanate-based crosslinking agent is a compound having at least two isocyanate groups in the molecule, and has high reactivity with a hydroxyl group or the like. Main examples of the isocyanate-based crosslinking agent include toluylene diisocyanate, diphenylmethane diisocyanate, hexamethylene diisocyanate, isophorone diisocyanate, and modification products or prepolymers thereof; polyfunctional aromatic isocyanate, aromatic polyisocyanate, polyfunctional aliphatic isocyanate, block type polyisocyanate, and polyisocyanate prepolymers. The details of these polyisocyanate-based crosslinking agents are described in, for example, Kakyozai Handobuku (Handbook of Crosslinking Agents) (published by Taiseisha, Ltd., published in October, 1981).

For both the inorganic crosslinking agents and organic crosslinking agents, the crosslinking agent is preferably used approximately in an amount in the range of 1% to 50% by mass, and more preferably used in an amount in the range of 2% to 40% by mass, with respect to the polymer binder, from the viewpoint of the film strength and flexibility of the heat-insulating layer.

The method for supplying these crosslinking agents to the heat-insulating layer is not particularly limited, and for example, a crosslinking agent may be added to a coating liquid for forming a heat-insulating layer, or a crosslinking agent may be supplied by providing a heat-insulating layer and then overcoating the crosslinking agent on the heat-insulating layer. In order to overcoat the crosslinking agent, the coating process may be carried out simultaneously or immediately after the application of the coating liquid for forming a heat-insulating layer. At this time, the method for applying the crosslinking agent may be coating using a coater or the like, may be coating according to a spraying method, or may be a method of coating by immersing in a crosslinking agent solution.

Subsequently, the method for forming a heat-insulating layer will be explained.

The method for forming the heat-insulating layer of the present invention is not particularly limited, but when the heat-insulating layer contains inorganic oxide particles and a polymer binder, a wet coating system is preferred. Specifically, the heat-insulating layer can be formed by mixing inorganic oxide particles, a polymer binder, and optionally a crosslinking agent with a solvent, thereby preparing a coating liquid, subsequently applying the coating liquid on a base material, and drying the coating liquid.

Regarding the aforementioned solvent, any solvent capable of uniformly dispersing inorganic oxide particles, a polymer binder and a crosslinking agent may be used. Specifically, one kind or two or more kinds of water, methanol, ethanol, 2-propanol, N-methylpyrrolidone, dimethylformamide, dimethylacetamide, N-methylformamide and the like can be used. At this time, various additives may be added in order to stabilize the coating liquid (dispersion liquid). These additives are not particularly limited as long as they are materials that can be removed by heating, or materials that do not destroy pores of the porous heat-insulating layer of the present invention.

Regarding the coating method using a coating liquid, the method is not particularly limited as long as it is a method capable of applying the coating liquid approximately uniformly to a desired thickness. Examples thereof include a screen printing method, a bar coating method, a roll coating method, a reverse coating method, a gravure printing method, a doctor blade method, and a die coating method. Regarding the format of coating, continuous coating, intermittent coating, stripe coating or the like can be used as appropriate according to necessity. Furthermore, it is also possible to perform coating by simultaneous superposition with the infrared reflecting layer.

The drying method after coating is not particularly limited as long as the method is capable of removing the solvent included in the coating liquid, and various methods such as hot air drying, infrared drying, far-infrared drying, microwave drying, electron beam drying, vacuum drying, and supercritical drying can be appropriately selected and used. The drying temperature is not particularly limited, but the drying temperature is preferably 50°C to 400°C, and more preferably 70° to 150°C.

Furthermore, when a UV-curable crosslinking agent is used, the thermal layer may be cured by further irradiating the layer with UV after coating, and thus the heat-insulating layer can be formed.

The method for forming a heat-insulating layer in a case in which the heat-insulating layer contains a foamed resin is also not particularly limited, and examples thereof include chemical foaming and physical foaming. For instance, in the case of foamed polystyrene, a method of introducing polystyrene and an inert gas in the supercritical state, such as carbon dioxide, as a foaming agent into a supercritical extruder, extruding a polystyrene sheet having fine air bubbles at a high density on the infrared reflecting layer, and forming a heat-insulating layer, can be employed.

The thickness of the heat-insulating layer formed by the above-described method is not particularly limited, but the thickness is preferably 100 nm to 200 $\mu$m, and more preferably 100 nm to 20 $\mu$m. When the thickness is in this range, the heat-insulating layer hardly has any adverse effect on transparency of the film, and the heat-insulating properties can be exhibited.

The heat-insulating layer may be provided on at least one side of the transparent resin film; however, in consideration of the mechanism of thermal cracks, it is preferable to provide the heat-insulating layer at a position closer to the glass plate. Specifically, an arrangement in which the heat-insulating layer is positioned between the transparent resin film and a glass plate is preferred, and an arrangement in which the heat-insulating layer is positioned between the infrared reflecting layer and a glass plate is more preferred. Furthermore, when an optical film including an infrared absorbing layer is used, an arrangement in which the heat-insulating layer is positioned between the infrared absorbing layer and a glass plate is preferred.

Meanwhile, the void ratio of the heat-insulating layer can be controlled, in a case in which the heat-insulating layer includes inorganic oxide particles and a polymer binder, by adjusting the contents of the respective components in the heat-insulating layer. Furthermore, when the heat-insulating layer includes a foamed resin, the void ratio of the heat-insulating layer can be controlled by controlling the conditions for foaming the resin.

<Hard coat layer>

For the optical film according to the present invention, it is preferable to laminate a hard coat layer containing an infrared absorbing pigment or the like as a surface protective layer for increasing scratch resistance.

The hard coat layer according to the present invention may be laminated on both surfaces of the transparent resin film of the present invention, or may be laminated on one surface. Depending on the transparent resin film, adhesiveness to intermediate films may be poor, or white turbidness may occur when an infrared reflecting layer is formed thereon. Therefore, these inconveniences can be solved by forming a hard coat layer. Furthermore, elongation of the transparent resin film can also be controlled by forming the hard coat layer.

The curable resin used in the hard coat layer may be a heat-curable resin or an ultraviolet-curable resin; however, from the viewpoint that molding can be achieved easily, an ultraviolet-curable resin is preferred, and among others, an ultraviolet-curable resin having a pencil hardness of at least 2H is more preferred. These curable resins can be used singly or in combination of two or more kinds thereof.

Examples of such an ultraviolet-curable resin include polyfunctional acrylate resins such as acrylic acid or methacrylic acid esters having polyhydric alcohols, and polyfunctional urethane acrylate resins synthesized from diisocyanates and acrylic acid or methacrylic acid having polyhydric alcohols. Furthermore, polyether resins having acrylate-based functional groups, polyester resins, epoxy resins, alkyd resins, spiro-acetal resins, polybutadiene resins, polythiol polyene resins, and the like can also be suitably used.

Furthermore, as reactive diluents for these resins, bifunctional or higher functional monomers or oligomers such as 1,6-hexanediol di(meth)acrylate, tripropylene glycol di(meth)acrylate, diethylene glycol di(meth)acrylate, hexanediol (meth)acrylate, pentaerythritol tri(meth)acrylate, trimethylolpropane tri(meth)acrylate, dipentaerythritol hexa(meth)acrylate, and neopentyl glycol di(meth)acrylate; N-vinylpyrrolidone, acrylic acid esters such as ethyl acrylate and propyl acrylate; methacrylic acid esters such as ethyl methacrylate, propyl methacrylate, isopropyl methacrylate, butyl methacrylate, hexyl methacrylate, isooctyl methacrylate, 2-hydroxyethyl methacrylate, cyclohexyl methacrylate, and nonylphenyl methacrylate; tetrahydrofurfuryl methacrylate and derivatives such as a caprolactone modification product thereof, and monofuncitonal monomers such as styrene, $\alpha$-methylstyrene, and acrylic acid, which have relatively lower viscosity, can be used. These reactive diluents can be used singly or in combination of two or more kinds.

Furthermore, as photosensitizers (radical polymerization initiators) for these resins, benzoin and alkyl ethers thereof, such as benzoin, benzoin methyl ether, benzoin ethyl ether, benzoin isopropyl ether, and benzyl methyl ketal; acetophenones such as acetophenone, 2,2-dimethoxy-2-phenylacetophenone, 1-hydroxycyclohexyl phenyl ketone; anthraquinones such as methylanthraquinone, 2-ethylanthraquinone, and 2-amylanthraquinone; thioxanthones such as thioxanthone, 2,4-diethylthioxanthone, and 2,4-diisopropylthioxanthone; ketals such as acetophenone dimethyl ketal, and benzyl dimethyl ketal; benzophenones such as benzophenone and 4,4-bismethylaminobenzophenone; and azo compounds can be used. These can be used singly or in combination of two or more kinds thereof. In addition, these photosensitizers can be used in combination with photoinitiator aids such as tertiary amines such as triethanolamine and methyldiethanolamine; and benzoic acid derivatives such as 2-dimethylaminoethylbenzoic acid and ethyl 4-dimethylaminobenzoate, and the like. The amount of use of these radical polymerization initiators is 0.5 parts to 20 parts by mass, and preferably 1 part to 15 parts by mass, relative to 100 parts by mass of the polymerizable components of the resin.

Meanwhile, well-known general coating material additives may also be incorporated as necessary to the curable resin described above. For example, silicone-based or fluorine-based coating material additives that impart leveling properties or surface slipping properties are effective for preventing scratches on the surface of cured films. In addition to that, in the case of utilizing ultraviolet radiation as active energy radiation, oxygen-induced inhibition of curing of the resin can be reduced as the coating material additives bleed to the air interface. Therefore, even under the conditions of low irradiation intensity, an effective degree of curing can be obtained.

Furthermore, the hard coat layer preferably contains inorganic fine particles. Preferred examples of inorganic fine particles include fine particles of inorganic compounds containing metals such as titanium, silica, zirconium, aluminum, magnesium, antimony, zinc, and tin. The average particle size of these inorganic fine particles is preferably 1000 nm or less, and more preferably in the range of 10 to 500 nm, in view of securing transmissibility of visible light. Furthermore, as inorganic fine particles have higher bonding force directed to the curable resin that forms the hard coat layer, fall-out of the inorganic fine particles from the hard coat layer can be suppressed; therefore, it is preferable for the inorganic fine particles to have photosensitive groups having photopolymerization reactivity, such as monofunctional or polyfunctional acrylates, introduced at the surface.

The thickness of the hard coat layer is preferably 0.1 $\mu$m to 50 $\mu$m, and more preferably 1 $\mu$m to 20 $\mu$m. When the thickness is 0.1 $\mu$m or more, the hard coating properties tend to be enhanced; on the contrary, when the thickness is 50 $\mu$m or less, transparency of an infrared shielding film tends to increase.

Meanwhile, the hard coat layer may also function as the infrared absorbing layer described above.

The method for forming the hard coat layer is not particularly limited, and for example, a method of preparing a coating liquid for hard coat layer containing the various components described above, subsequently applying the coating liquid using a wire bar or the like, curing the coating liquid with heat and/or UV, and thereby forming a hard coat layer, may be used.

<Tacky adhesive layer>

The optical film according to the present invention may further have a tacky adhesive layer.

The tacky adhesive that constitutes the tacky adhesive layer is not particularly limited, and examples thereof include an acrylic tacky adhesive, a silicone-based tacky adhesive, a urethane-based tacky adhesive, a polyvinyl butyral-based tacky adhesive, and an ethylene-vinyl acetate-based tacky adhesive.

When the optical film according to the present invention is pasted to window glass, a method of pasting the tacky adhesive layer of the infrared shielding film to a glass surface in a wet state by spraying water to the window, that is, a so-called water pasting method, is suitably used from the viewpoints of reattachability, positional correction, and the like. Therefore, an acrylic tacky adhesive having a weak tacky adhesive force in a wet state in which water is present, is preferably used.

The acrylic tacky adhesive used may be any of a solvent system and an emulsion system; however, from the viewpoint that it is easy to increase the tacky adhesive force or the like, a solvent-based tacky adhesive is preferable, and among others, a tacky adhesive obtainable by solution polymerization is preferred. Examples of the raw material in the case of producing such a solvent-based acrylic tacky adhesive by solution polymerization include, as main monomers that constitute the skeleton, acrylic acid esters such as ethyl acrylate, butyl acrylate, 2-ethylhexyl acrylate, and octyl acrylate; as comonomers for enhancing the aggregating force, vinyl acetate, acrylonitrile, styrene, and methyl methacrylate; and as functional group-containing monomers for accelerating crosslinking, imparting stable tacky adhesive force, and maintaining a tacky adhesive force to a certain extent in the presence of water, methacrylic acid, acrylic acid, itaconic acid, hydroxyethyl methacrylate, and glycidyl methacrylate. In the tacky adhesive layer of the laminate film, since the main polymer particularly needs high tackiness, it is particularly useful for the monomer to have a low glass transition temperature (Tg), such as butyl acrylate.

In this tacky adhesive layer, for example, a stabilizer, a surfactant, an ultraviolet absorber, a flame retardant, an antistatic agent, an oxidation inhibitor, a thermal stabilizer, a lubricating agent, a filler, a colorant, and an adhesion adjusting agent as additives can also be incorporated. Particularly, when the tacky adhesive layer is used for window pasting as in the case of the present invention, addition of an ultraviolet absorber is effective even for suppressing deterioration of the infrared shielding film caused by ultraviolet radiation.

The thickness of the tacky adhesive layer is preferably 1 $\mu$m to 100 $\mu$m, and more preferably 3 to 50 $\mu$m. When the thickness is 1 $\mu$m or more, tacky adhesiveness tends to increase, and thus sufficient tacky adhesive force may be obtained. On the contrary, when the thickness is 100 $\mu$m or less, transparency of the infrared shielding film is enhanced, and also, when the infrared shielding film is attached to window glass and then peeled, cohesive destruction does not occur between tacky adhesive layers, and there is tendency that no residual adhesive remains on the glass surface.

The method for forming the tacky adhesive layer is not particularly limited, and for example, a tacky adhesive coating liquid containing the tacky adhesive is prepared, subsequently the coating liquid is applied on a separator film using a wire bar or the like, the coating liquid is dried, and thus a tacky adhesive layer film is produced. Thereafter, a method of pasting the tacky adhesive layer surface of the tacky adhesive layer film to the surface of a heat-insulating layer using a laminating machine, may be used.

<Transparent resin film>

The transparent resin film according to the present invention accomplishes the role as a support for an optical film.

The thickness of the transparent resin film according to the present invention is preferably 30 to 200 $\mu$m, more preferably 30 to 70 $\mu$m, and most preferably 35 to 70 $\mu$m. When the thickness is larger than 30 $\mu$m, wrinkles are not easily generated during handling. Furthermore, when the thickness is smaller than 200 $\mu$m, when pasted to glass, conformity to a glass curved surface is improved, and wrinkles are not easily generated.

The transparent resin film according to the present invention is preferably a biaxially oriented polyester film; however, as long as the film thus obtained maintains the gist of the present invention, an unstretched polyester film or a polyester film that has been stretched in at least one direction can also be used. From the viewpoint of enhancing the strength and suppressing thermal expansion, a stretched film is preferred. Particularly when the transparent resin film is used for the windscreen of an automobile, a stretched film is more preferred.

The transparent resin film according to the present invention is such that the thermal shrinkage at a temperature of 150°C is preferably 0.1% to 3%, more preferably 1.5% to 3%, and even more preferably 1.9% to 2.7%, from the viewpoint of preventing generation of wrinkles in the optical film or cracking of the reflecting layer when a laminated glass is produced.

Meanwhile, measurement of the thermal shrinkage can be carried out as follows.

When atensile force of 10N per meter of a transparent resin film is applied at 150°C in the machine direction (MD) and the width direction (TD) of the film, the average value of the elongations for MD and TD of the relevant film is determined as the thermal shrinkage.

The transparent resin film that is applied to the laminated glass of the present invention is not particularly limited as long as the film is transparent, and various resin films can be used. Polyolefin films (polyethylene, polypropylene, and the like), polyester films (polyethylene terephthalate, polyethylene naphthalate, and the like), polyvinyl chloride, cellulose triacetate, and the like can be used, and preferred is a polyester film. There are no particular limitations on the polyester film (hereinbelow, referred to as polyester), but a polyester having film formability and containing a dicarboxylic acid component and a diol component as key constituent components is preferred. Examples of the dicarboxylic acid component as a key constituent component include terephthalic acid, isophthalic acid, phthalic acid, 2,6-naphthalenedicarboxylic acid, 2,7-naphthalenedicarboxylic acid, diphenylsulfone dicarboxylic acid, diphenyl ether dicarboxylic acid, diphenylethane dicarboxylic acid, cyclohexanedicarboxylic acid, diphenyldicarboxylic acid, diphenyl thioether dicarboxylic acid, diphenyl ketone dicarboxylic acid, and phenylindane dicarboxylic acid. Furthermore, examples of the diol component include ethylene glycol, propylene glycol, tetramethylene glycol, cyclohexanedimethanol, 2,2-bis(4-hydroxyphenyl) propane, 2,2-bis(4-hydroxyethoxyphenyl) propane, bis(4-hydroxyphenyl)sulfone, bisphenol fluorene hydroxyethyl ether, diethylene glycol, neopentyl glycol, hydroquinone, and cyclohexanediol. Among polyesters containing these as key constituent components, polyesters containing, as key constituent components, terephthalic acid or 2,6-naphthalenedicarboxylic acid as the dicarboxylic acid component, and ethylene glycol or 1,4-cyclohexanedimethanol as the diol component are preferred from the viewpoints of transparency, mechanical strength, dimensional stability and the like. Among them, a polyester containing polyethylene terephthalate or polyethylene naphthalate as a key constituent component, a copolymerized polyester formed from terephthalic acid, 2,6-naphthalenedicarboxylic acid and ethylene glycol, and a polyester containing a mixture of two or more kinds of these polyesters as a key constituent component are preferred.

The transparent resin film according to the present invention may contain particles for the purpose of facilitating handling, provided that transparency is not impaired. Examples of the particles used in the present invention include inorganic particles of calcium carbonate, calcium phosphate, silica, kaolin, talc, titanium dioxide, alumina, barium sulfate, calcium fluoride, lithium fluoride, zeolite, molybdenum sulfide, and the like; crosslinked polymer particles; and organic particles of calcium oxalate and the like. Furthermore, examples of the method of adding particles include a method of adding particles by incorporating the particles into the polyester used as a raw material, and a method of directly adding particles to the extruder. Any one of these methods may be employed, or two methods may be used in combination. In the present invention, additives in addition to the particles may also be added as necessary. Examples of such additives include a stabilizer, a lubricating agent, a crosslinking agent, a blocking inhibitor, an oxidation inhibitor, a dye, a pigment, and an ultraviolet absorber.

The transparent resin film can be produced by a conventionally known general method. For example, an unstretched transparent resin film that is substantially amorphous and is not oriented, can be produced by melting a resin that serves as a material using an extruder, extruding the resin by an annular die or a T-die, and rapidly cooling the resin. Furthermore, a stretched transparent resin film can be produced by stretching an unstretched transparent resin film in the mechanical (longitudinal axis) direction of the transparent resin film, or in a direction perpendicular to the mechanical direction (horizontal axis) of the transparent resin film, by known methods such as uniaxial stretching, tenter type sequential biaxial stretching, tenter type simultaneous biaxial stretching, and tubular type simultaneous biaxial stretching. The stretch ratio in this case can be appropriately selected in accordance with the resin that serves as the raw material of the transparent resin film, but the stretch ratio is preferably 2 to 10 times for the longitudinal direction and the transverse direction, respectively.

Furthermore, the transparent resin film may be subjected to a relaxation treatment and an off-line heat treatment in view of dimensional stability. The relaxation treatment is preferably carried out by a process which includes, after thermal fixation of the polyester film during a film stretching and production process, up to the process in the tenter for transverse stretching, or to winding after passing through the tenter. The relaxation treatment is preferably carried out at a treatment temperature of 80°C to 200°C, and more preferably, the treatment temperature is 100°C to 180°C. Also, it is preferable that the relaxation treatment is carried out at a relaxation ratio in the range of 0.1% to 10%, and more preferably at a relaxation ratio of 2% to 6%, for both the longitudinal direction and the width direction. A base material that has been subjected to a relaxation treatment has enhanced heat resistance by being subjected to an off-line heat treatment as described below, and also has satisfactory dimensional stability.

In the transparent resin film, it is preferable to apply a coating liquid for undercoat layer in an in-line mode on one surface or both surfaces of the film during the film production process. According to the present invention, undercoat application during the film production process is called in-line undercoating. Examples of the resin used in the coating liquid for undercoat layer that is useful for the present invention include a polyester resin, an acryl-modified polyester resin, a polyurethane resin, an acrylic resin, a vinyl resin, a vinylidene chloride resin, a polyethyleneimine vinylidene resin, a polyethyleneimine resin, a polyvinyl alcohol resin, a modified polyvinyl alcohol resin, and gelatin, and all of these can be preferably used. In this undercoat layer, conventionally known additives may be added. The undercoat layer can be applied by known methods such as roll coating, gravure coating, knife coating, dip coating, and spray coating. The amount of coating of the undercoat layer is preferably about 0.01 to 2 g/m$^2$ (dry state) .

[Intermediate film]

The two sheets of intermediate films according to the present invention contain thermoplastic resins. The constituent materials of the two sheets of intermediate films may be identical or may be different. Also, the intermediate film according to the present invention may be applied in advance as a tacky adhesive layer on an optical film.

The intermediate film according to the present invention contains a thermoplastic resin, and specific preferred examples thereof include an ethylene-vinyl acetate copolymer (EVA) or a polyvinyl butyral (PVB) . That is, the intermediate film according to the present invention is preferably a film formed of EVA or PVB. Furthermore, for each intermediate film, it is more preferable to incorporate various fine particles absorbing infrared radiation, ultraviolet absorbers and the like to the extent that the visible light transmittance is not impaired, to incorporate a colorant to color the intermediate film, or to adjust the sunlight transmittance to 75% or less.

Examples of the fine particles that absorb infrared radiation include metal fine particles of Ag, Al, Ti and the like, fine particles of metal nitrides and metal oxides, and conductive transparent metal oxide fine particles of ITO, ATO, aluminum zinc composite oxide (AZO), gallium-doped zinc oxide (GZO), indium zinc composite oxide (IZO), and the like. The heat-insulating performance can be enhanced by selecting one or more kinds among these, and incorporating the fine particles to the intermediate film. Particularly, conductive transparent metal oxide fine particles of ITO, ATO, AZO, GZO, IZO, and the like are preferred.

In the case of coloring EVA or PVB, various known pigments or various dyes that are generally used as colorants can be used. Examples of the various dyes that can be used include an anthraquinone dye, an azo dye, an acridine dye, and an indigoid dye; and examples of the various pigments that can be used include carbon black, red iron oxide, phthalocyanine blue, phthalocyanine green, Prussian blue, Zinc white, azo pigments, and indanthrene-based pigments. Furthermore, a colored polyvinyl acetal film obtained by coloring a polyvinyl acetal film with the dye or pigment described above and laminated with EVA or PVB, may also be used as an intermediate film on the indoor side.

<<Glass plate>>

For the glass according to the present invention, a commercially available glass may be used.

There are no particular limitations on the kind of the glass; however, usually, soda lime silica glass is suitably used. In this case, colorless transparent glass is desirable, and colored transparent glass is also acceptable.

Furthermore, between the two sheets of glass plates, the glass on the outdoor side that is closer to incident light is preferably colorless transparent glass. Also, the glass on the indoor side that is far from the light incident side is preferably green-colored transparent glass or deep-colored transparent glass. The green-colored transparent glass preferably has ultraviolet absorption performance and infrared absorption performance. It is because when these are used, sunlight energy can be reflected as much as possible on the outdoor side, and the sunlight transmittance of the laminated glass can be further reduced.

The green-colored transparent glass is not particularly limited, but for example, soda lime silica glass containing iron may be suitably used. An example thereof may be soda lime silica glass containing 0.3% to 1% by mass of total iron in terms of $Fe_2O_3$ in a soda lime silica-based mother glass. Furthermore, since absorption of light having a wavelength in the near-infrared region is such that absorption by divalent iron in the total iron is predominant, it is preferable that the mass of FeO (divalent iron) is 20% to 40% by mass of the total iron in terms of $Fe_2O_3$.

In order to impart ultraviolet absorption performance, a method of adding cerium or the like to soda lime silica-based mother glass may be used. Specifically, it is preferable to use a soda lime silica glass substantially having the following composition: $SiO_2$: 65% to 75% by mass, $Al_2O_3$: 0.1% to 5% by mass, $Na_2O+K_2O$: 10% to 18% by mass, CaO: 5% to 15% by mass, MgO: 1% to 6% by mass, total iron in terms of $Fe_2O_3$: 0.3% to 1% by mass, total cerium and/or $TiO_2$ in terms of $CeO_2$: 0.5% to 2% by mass.

Furthermore, there are no particular limitations on the deep-colored transparent glass, but a suitable example may be a soda lime silica glass containing iron at a high concentration.

On the occasion of using the laminated glass of the present invention for the windows of vehicles and the like, the thicknesses of the indoor side glass plate and the outdoor side glass plate are both preferably 1.5 to 3.0 mm. In this case, the indoor side glass plate and the outdoor side glass plate may have the same thickness, or may have different thicknesses. On the occasion of using the laminated glass for car windows, for example, the indoor side glass plate and the outdoor side glass plate may be both made to have a thickness of 2.0 mm or to have a thickness of 2.1 mm. Furthermore, on the occasion of using the laminated glass for car windows, for example, when the thickness of the indoor side glass plate is set to be less than 2 mm, and the thickness of the outdoor side glass plate is set to be more than 2 mm, the total thickness of the laminated glass plates can be reduced, and the laminated glass can resist any external force on the outside of the car. The indoor side glass plate and the outdoor side glass plate may have a flat shape or may have a curved shape. Since windows for vehicles, particularly car windows, are frequently curved, the shape of the indoor side glass plate and the outdoor side glass plate is frequently a curved shape. In this case, the infrared reflecting film is installed on the concave side of the outdoor side glass plate. Furthermore, if necessary, three or more sheets of glass plates can also be used.

{Method for producing laminated glass}

The method for producing the laminated glass of the present invention is not particularly limited; however, for example, a method of laminating a glass plate, an intermediate film, an optical film, an intermediate film, and a glass plate in order, removing any excess parts protruding from the edges of the glass plates as necessary, subsequently heating the assembly at 100°C to 150°C for 10 to 60 minutes, and conducting a bonding treatment by performing a pressing and degassing treatment, may be used.

**EXAMPLES**

Hereinbelow, the present invention is described specifically by referring to Examples, but the present invention is not intended to be limited to these. In the Examples, the term "parts" or "%" is used; however, unless particularly stated otherwise, this represents "parts by mass" or "% by mass". Also, unless particularly stated otherwise, the various operations are carried out at room temperature (25°C).

[Example 1]

<Production of laminated glass sample 101>

(Preparation of coating liquid for low refractive index layer L1)

First, 680 parts of an aqueous solution containing 10 mass% of colloidal silica (manufactured by Nissan Chemical Industries, Ltd., SNOWTEX (registered trademark) OXS) as second metal oxide particles, 30 parts of an aqueous containing 4.0 mass% of a polyvinyl alcohol (manufactured by Kuraray Co., Ltd., PVA-103: degree of polymerization 300, degree of saponification 98.5mol%), and 150 parts of an aqueous solution containing 3.0 mass% of boric acid were mixed and dispersed. Pure water was added thereto, and thus 1000 parts in total of a colloidal silica dispersion liquid L1 was prepared.

Subsequently, the colloidal silica dispersion liquid L1 thus obtained was heated to 45°C, and 760 parts of an aqueous solution containing 4.0 mass% of a polyvinyl alcohol (manufactured by Japan Vam & Poval Co., Ltd., JP-45: degree of polymerization 4500, degree of saponification 88 mol%) as a polyvinyl alcohol (B) was added sequentially with stirring. Thereafter, 40 parts of an aqueous solution containing 1 mass% of a betaine-based surfactant (manufactured by Kawaken Fine Chemical Co., Ltd., SOFTAZOLINE (registered trademark) LSB-R) was added thereto, and thus a coating liquid for low refractive index layer L1 was prepared.

(Preparation of coating liquid for high refractive index layer H1)

(Preparation of rutile type titanium oxide for core of core-shell particles)

An aqueous suspension liquid of titanium oxide was prepared by suspending titanium oxide hydrate in water to obtain a concentration of 100 g/L in terms of $TiO_2$. To 10 L (liter) of the suspension, 30 L of an aqueous solution of sodium hydroxide (concentration: 10 mol/L) was added with stirring, and then the mixture was heated to 90°C and aged for 5 hours. Subsequently, the mixture was neutralized using hydrochloric acid, and after filtration, the filter cake was washed using water.

Meanwhile, for the reaction (treatment) described above, the raw material titanium oxide hydrate was obtained by subjecting an aqueous solution of titanium sulfate to a thermal hydrolysis treatment according to a known technique.

The base-treated titanium compound was suspended in pure water to obtain a concentration of 20 g/L in terms of $TiO_2$. Citric acid was added thereto with stirring in an amount of 0.4 mol% relative to the amount of $TiO_2$. Thereafter, the mixture was heated, and when the temperature of the mixed sol liquid reached 95°C, concentration hydrochloric acid was added thereto to obtain a hydrochloric acid concentration of 30 g/L. While the temperature of the liquid was maintained at 95°C, the mixed liquid was stirred for 3 hours, and thus a titanium oxide sol liquid was prepared.

As described above, the pH and zeta potential of the titanium oxide sol liquid thus obtained were measured, and the pH was 1.4, while the zeta potential was +40 mV. Also, the particle size was measured using a ZETASIZER NANO manufactured by Malvern Instruments, Ltd., and the monodispersity was 16%.

Furthermore, the titanium oxide sol liquid was dried at 105°C for 3 hours, and thus powdery fine particles of titanium oxide were obtained. The powdery fine particles of titanium oxide was subjected to X-ray diffraction using Model JDX-3530 manufactured by JEOL, Ltd. DATUM, and it was confirmed that the powdery fine particles were rutile type titanium oxide fine particles. Furthermore, the volume average particle size of the fine particles was 10 nm.

Then, a 20.0 mass% water-based dispersion liquid of titanium oxide sol containing rutile type titanium oxide fine particles having a volume average particle size of 10 nm thus obtained was added to 4 kg of pure water, and thus a sol liquid to be used as core particles was obtained.

(Preparation of core-shell particles by shell coating)

0.5 kg of a 10.0 mass% water-based dispersion liquid of titanium oxide sol was added to 2 kg of pure water, and the mixture was heated to 90°C. Subsequently, 1.3 kg of an aqueous solution of silicic acid prepared to have a concentration of 2.0 mass% in terms of $SiO_2$ was slowly added thereto, the mixture was subjected to a heating treatment at 175°C for 18 hours in an autoclave, and the mixture was further concentrated. Thus, a sol liquid (solid content concentration: 20 mass%) of core-shell particles (average particle size: 10 nm) in which the core particles was formed of titanium oxide having a rutile structure, and the coating layer was formed of $SiO_2$, was obtained.

(Preparation of coating liquid for high refractive index layer H1)

28.9 parts of the sol liquid containing core-shell particles as first metal oxide particles at a solid content concentration of 20.0 mass% obtained as described above, 10.5 parts of a 1.92 mass% aqueous solution of citric acid, 2.0 parts of a 10 mass% aqueous solution of a polyvinyl alcohol (manufactured by Kuraray Co., Ltd., PVA-103: degree of polymerization 300, degree of saponification 98.5 mol%), and 9.0 parts of a 3 mass% aqueous solution of boric acid were mixed, and thus a core-shell particle dispersion liquid H1 was prepared.

Subsequently, while the core-shell dispersion liquid H1 was stirred, 16.3 parts of pure water and 33.5 parts of a 5.0 mass% aqueous solution of a polyvinyl alcohol (manufactured by Kuraray Co., Ltd., PVA-124: degree of polymerization 2400, degree of saponification 98.5 mol%) as a polyvinyl alcohol (A) were added thereto. Furthermore, 0.5 parts of a 1 mass% aqueous solution of a betaine-based surfactant (manufactured by Kawaken Fine Chemical Co., Ltd., SOFTAZOLINE (registered trademark) LSB-R) was added thereto, and 1000 parts in total of a coating liquid for high refractive index layer H1 was prepared using pure water.

<Production of optical film 101>

While the coating liquid for low refractive index layer L1 and the coating liquid for high refractive index layer H1 described above were maintained at 45°C, five layers of low refractive index layers and four layers of high refractive index layers were alternately applied into nine layers in total by coating by simultaneous superposition, on a polyethylene terephthalate film (thermal shrinkage at 150°C: 0.5%) having a thickness of 50 μm and heated to 45°C, using a slide hopper coating apparatus capable of coating by superposition, such that the film thicknesses upon drying of the respective high refractive index layers and the low refractive index layers would be 130 nm.

Immediately after coating, cold air at 5°C was blown, and thus the layers were set. At this time, the time taken until nothing adhered to the finger even if the surface was touched with a finger (set time) was 5 minutes.

After completion of setting, hot air at 80°C was blown to dry the layers, and thus a superposition coated article composed of nine layers was produced.

Nine-layer superposition coating was carried out two more times on the nine-layer superposition coated article, and thus an infrared reflecting layer composed of 27 layers in total was produced.

(Preparation of coating liquid for hard coat layer)

7.5 parts by mass of a UV-curable hard coating material (UV-7600B, manufactured by Nippon Synthetic Chemical Industry Co., Ltd.) was added to 90 parts by mass of a methyl ethyl ketone solvent, and 0.5 parts by mass of a photopolymerization initiator (IRGACURE (registered trademark) 184, manufactured by Ciba Specialty Chemicals Corp.) was added thereto. The mixture was mixed with stirring. Subsequently, 2 parts by mass of an ATO powder (ultrafine particulate ATO, manufactured by Sumitomo Metal Mining Co., Ltd.) was added to the mixed liquid, and the mixture was stirred at a high speed with a homogenizer. Thus, a coating liquid for hard coat layer was prepared.

On the PET film (polyethylene terephthalate film) on the opposite side of the surface where the infrared reflecting layer obtained as described above was formed, the coating liquid for hard coat layer was applied using a wire bar so as to obtain a dried film thickness of 3 $\mu$m, and the coating liquid was dried with hot air at 70°C for 3 minutes. Thereafter, curing was carried out in air in an amount of irradiation of 400 mJ/cm$^2$ using a UV curing apparatus (using a high pressure mercury lamp) manufactured by Eye Graphics Co., Ltd., and thereby a hard coat layer having infrared absorptivity was formed.

In this manner, an optical film 101 was produced.

<Production of laminated glass sample 101>

Next, a green glass plate (visible light transmittance Tv: 81%, sunlight transmittance Te: 63%) having a thickness of 3 mm that would be an indoor side glass plate, a film formed of polyvinyl butyral having a thickness of 380 $\mu$m that would be an intermediate film on the indoor side, the optical film 101 produced as described above, a film formed of polyvinyl butyral having a thickness of 380 $\mu$m that would be an intermediate film on the outdoor side, and a clear glass plate (visible transmittance Tv: 91%, sunlight transmittance Te: 86%) having a thickness of 3 mm that would be an outdoor side glass plate) were laminated in this order. Excess parts protruding from the edges of the glass plates were removed, subsequently the assembly was heated at 135°C for 30 minutes, and the assembly was subjected to a bonding treatment by pressing and degassing. Thus, a laminated glass sample 101 was produced.

[Examples 2 to 4]

<Production of laminated glass samples 102 to 104>

As shown in Table 1, laminated glass samples 102 to 104 were produced in the same manner as in the production of the optical film 101 of Example 1, except that polyethylene terephthalate films having a thickness of 50 $\mu$m and different thermal shrinkages as indicated in Table 1 were used instead of the polyethylene terephthalate film (thermal shrinkage at 150°C: 0.5%).

[Reference Example 5]

<Production of laminated glass sample 105>

Laminated glass sample 105 was produced in the same manner as in Example 4, except that the preparation of the coating liquid for low refractive index layer and the preparation of the coating liquid for high refractive index layer were changed as described below.

(Preparation of coating liquid for low refractive index layer L43)

Additive materials 1) to 5) described below were added in this order and mixed, and thus a coating liquid for low refractive index layer L43 was prepared. More specifically, first, colloidal silica (manufactured by Nissan Chemical Industries, Ltd., SNOWTEX (registered trademark) AK) 1) was heated to 40°C while stirred, subsequently low molecular weight gelatin 2) was added thereto, and the mixture was stirred for 10 minutes. Subsequently, high molecular weight gelatin 3) and pure water 4) were added thereto, the mixture was stirred for 10 minutes, and then surfactant 5) was added thereto. Thus, a coating liquid for low refractive index layer L43 was prepared.

1) 20 mass% colloidal silica: 68 parts
2) 5.0 mass% aqueous solution of low molecular weight gelatin (GelL1): 180 parts
3) 5.0 mass% aqueous solution of high molecular weight gelatin (GelH1): 100 parts
4) Pure water: 240 parts
5) 5.0 mass% aqueous solution of surfactant (COATAMIN 24P, quaternary ammonium-based cationic surfactant, manufactured by Kao Corp.): 0.64 parts

Meanwhile, GelL1 was a low molecular weight gelatin (HBC-P20 manufactured by Nitta Gelatin, Inc.) having a weight average molecular weight of 20,000 that had been subjected to hydrolysis by an alkali treatment, and GelH1 was an acid-treated gelatin (high molecular weight gelatin) (AP-270 manufactured by Nippi, Inc.) having a weight average molecular weight of 130,000.

(Preparation of coating liquid for high refractive index layer H43)

Additive materials 1) to 5) described below were added in this order and mixed, and thus a coating liquid for high refractive index layer H43 was prepared. More specifically, first, titanium oxide particle sol1) was heated to 50°C while stirred, subsequently low molecular weight gelatin 2) was added thereto, and the mixture was stirred for 30 minutes. Thereby, the surface of titanium oxide particles was coated with the low molecular weight gelatin. Subsequently, high molecular weight gelatin 3) and pure water 4) were added thereto, the mixture was stirred for 90 minutes, and then surfactant 5) was added thereto. Thus, a coating liquid for high refractive index layer H43 was prepared.

    1) 20 mass% titanium oxide particle sol: 60 parts
    2) 5.0 mass% aqueous solution of low molecular weight gelatin (GelL1): 125 parts
    3) 5.0 mass% aqueous solution of high molecular weight gelatin (GelH1): 100 parts
    4) Pure water: 150 parts
    5) 5.0 mass% aqueous solution of surfactant (COATAMIN 24P, quaternary ammonium-based cationic surfactant, manufactured by Kao Corp.): 0.45 parts

[Example 6]

<Production of laminated glass sample 106>

A laminated glass sample 106 was produced in the same manner as in Example 4, except that for the preparation of the coating liquid for low refractive index layer L1, a polyvinyl alcohol (manufactured by Japan Vam & Poval Co., Ltd., JM-33: degree of polymerization 3300, degree of saponification 94.5 mol%) was used as the polyvinyl alcohol (B), instead of the polyvinyl alcohol (manufactured by Japan Vam & Poval Co., Ltd., JP-45: degree of polymerization 4500, degree of saponification 88 mol%).

[Example 7]

<Production of laminated glass sample 107>

A laminated glass sample 107 was produced in the same manner as in Example 4, except that for the preparation of the coating liquid for high refractive index layer H1, a polyvinyl alcohol (manufactured by Kuraray Co., Ltd., PVA-224: degree of polymerization 2400, degree of saponification 89 mol%) as the polyvinyl alcohol (A) was used instead of the polyvinyl alcohol (manufactured by Kuraray Co., Ltd., PVA-124: degree of polymerization 2400, degree of saponification 98.5 mol%) as the polyvinyl alcohol (A).

[Example 8]

<Production of laminated glass sample 108>

A laminated glass sample 108 was produced in the same manner as in Example 4, except that for the preparation of the coating liquid for hard coat layer, 2 parts by mass of an ATO powder (ultrafine particulate ATO, manufactured by Sumitomo Metal Mining Co., Ltd.) was not added to the mixed liquid.

[Example 9]

<Production of laminated glass sample 109>

13.5 parts by mass of silica particles A2 00 (manufactured by Nippon Aerosil Co., Ltd., average particle size 5 nm) were added to 40 g of water, and 1.0 part by mass of acetic acid was added thereto. The mixture was dispersed and mixed for 30 minutes using a homogenizer at 5000 rpm. Furthermore, 5.5 parts by mass of PVA217 (polyvinyl alcohol, degree of polymerization 1700, manufactured by Kuraray Co., Ltd.) was added thereto, and finally, 40 g of water was added thereto with stirring. Thus, a coating liquid for heat-insulating layer having a non-volatile component proportion of 20% by mass was prepared. The coating liquid for heat-insulating layer thus obtained was applied using a die coater on the laminated glass sample 104 produced in Example 4 to obtain a dried film thickness of 10 μm, and the coating

liquid was dried under the conditions of 70°C and 90 seconds to thereby form a heat-insulating layer. Thus, a laminated glass sample 109 was produced.

[Example 10]

<Production of laminated glass sample 110>

(Preparation of coating liquid for low refractive index layer L2)

First, 21 parts of a 23.5 mass% aqueous solution of polyaluminum chloride (manufactured by Taki Chemical Co., Ltd., TAKIBAIN (registered trademark) #1500), 550 parts of a 10 mass% aqueous solution of colloidal silica (manufactured by Nissan Chemical Industries, Ltd., SNOWTEX (registered trademark) OXS) as second metal oxide particles, 61 parts of a 3.0 mass% aqueous solution of boric acid, and 4.75 parts of a 2.1 mass% aqueous solution of lithium hydroxide were mixed, and the mixture was dispersed using a high pressure homogenizer dispersing machine. Thereafter, pure water was added thereto, and thus 1000 parts in total of a dispersion liquid of colloidal silica L2 was prepared.

Subsequently, the dispersion liquid L2 thus obtained was heated to 45°C, and 100 parts of pure water and 575 parts of a 4.0 mass% aqueous solution of a polyvinyl alcohol (manufactured by Kuraray Co., Ltd., PVA-235: degree of polymerization 3500, degree of saponification 88 mol%) as the polyvinyl alcohol (B) were added thereto with stirring. Thereafter, 0.50 parts of 5 mass% quaternary ammonium salt-based cationic surfactant (manufactured by NOF Corp., NISSAN CATION (registered trademark) 2-DB-500E) as a surfactant was added thereto. Thus, a coating liquid for low refractive index layer L2 was prepared.

(Preparation of coating liquid for high refractive index layer H2)

First, 21.8 parts of a 20.0 mass% water-based dispersion liquid of titanium oxide sol containing rutile type titanium oxide fine particles (volume average particle size: 10 nm) as first metal oxide particles, 0.6 parts of a 7.5 mass% aqueous solution of glycine, 2.1 parts of 3.0 mass% of aqueous solution of boric acid, 9.0 parts of 10.0 mass% polyvinyl alcohol (manufactured by Kuraray Co., Ltd., PVA-103), and 44.0 parts of pure water were mixed, and then the mixture was subjected to US dispersing (ultrasonic dispersing). Thus, a titanium oxide dispersion liquid H2 was prepared.

Subsequently, 6.8 parts of pure water and 15.4 parts of 5.0 mass% polyvinyl alcohol (manufactured by Kuraray Co., Ltd., PVA-124) as the polyvinyl alcohol (A) were sequentially added with stirring, to the titanium oxide dispersion liquid H2 obtained as described above. Thereafter, 0.15 parts of a 5 mass% quaternary ammonium salt-based cationic surfactant (manufactured by NOF Corp., NISSAN CATION (registered trademark) 2-DB-500E) as a surfactant was added thereto. Pure water was added to the mixture, and thus 100 parts in total of a coating liquid for high refractive index layer H2 was prepared.

<Production of optical film sample 110>

An optical film sample 110 was produced in the same manner as in Example 1, except that for the production of the optical film 101, the coating liquid for high refractive index layer H2 and the coating liquid for low refractive index layer L2 were respectively used instead of the coating liquid for high refractive index layer H1 and the coating liquid for low refractive index layer L1, and the transparent resin film used in Example 4 was used as the transparent resin film.

<Production of laminated glass sample 110>

A laminated glass sheet 110 was produced in the same manner as in Example 1, except that for the production of the laminated glass sample 101, the optical film 110 was used instead of the optical film 101.

[Comparative Example 1]

<Production of laminated glass sample 111>

On a PET film (thermal shrinkage at 150°C: 2.7%), $Nb_2O_5$ as a high refractive index layer and $SiO_2$ as a low refractive index layer was sequentially formed in seven layers using a known sputtering method such that the thickness per layer of the high refractive index layer and the low refractive index layer would be 115 nm and 175 nm, respectively. Thus, an optical film 111 was produced.

A laminated glass sample 111 was produced in the same manner as in Example 1, except that the optical film 111 produced in this manner was used instead of the optical film 101.

[Comparative Example 2]

<Production of laminated glass sample 112>

An optical film 112 was produced by sequentially forming seven layers of $Nb_2O_5$ and $TiO_2$ as high refractive index layers and $SiO_2$ as low refractive index layers on a PET film (thermal shrinkage at 150°C: 2.7%) using a known CVD method such as that the thickness per layer of the high refractive index layer and the low refractive index layer would be 115 nm and 175 nm, respectively.

A laminated glass 112 was produced in the same manner as in Example 1, except that the optical film 112 produced in this manner was used instead of the optical film 101.

[Comparative Example 3]

<Production of laminated glass sample 113>

A resin for high refractive index layer and a resin for low refractive index layer were produced by melt kneading polyethylene terephthalate (intrinsic viscosity: 0.65, melting point: 255°C, F20S manufactured by Toray Industries, Inc.) for the high refractive index layers, and a mixture of a polyethylene terephthalate copolymer (intrinsic viscosity: 0.72, copolymerization of cyclohexanedicarboxylic acid component: 29 mol% and spiro-glycol component: 20 mol%), PBT (TORAYCON, manufactured by Toray Industries, Inc.), PET (manufactured by Toray Industries, Inc.) and ADEKASTAB (AS36 manufactured by Adeka Corp.) at a mass ratio of 69.9/20/10/0.1 for the low refractive index layers. Then, a laminate of 400 layers by respectively bringing the resin for high refractive index layer and the resin for low refractive index layer to a molten state at 270°C in an extruder, and extruding the resins between slits using a gear pump, while measuring the amounts such that the ratio of the resin for high refractive index layer/resin for low refractive index layer was 1.2/1. Thereafter, the laminate was stretched 3.3 times in the transverse direction at a temperature of 110°C, and was subjected to a relaxation treatment of 5% in the same direction at the same temperature. The laminate was cooled to room temperature. Subsequently, a hard coat layer was formed in the same manner as in Example 1, and thus a laminated glass sample 113 was produced.

[Table 1]

| | Sample | Infrared reflecting layer | | | Infrared absorbing layer | | Transparent resin film | |
|---|---|---|---|---|---|---|---|---|
| | | Molding method | High refractive index layer main composition | Low refractive index layer main composition | Molding method | Main composition | Thickness (μm) | Thermal shrinkage (%) |
| Example 1 | 101 | Coating | Si-covered $TiO_2$/PVA124 | $SiO_2$/JP-45 | Coating | ATO-containing CHC | 50 | 0.5 |
| Example 2 | 102 | Coating | Si-covered $TiO_2$/PVA124 | $SiO_2$/JP-45 | Coating | ATO-containing CHC | 50 | 1.1 |
| Example 3 | 103 | Coating | Si-covered $TiO_2$/PVA124 | $SiO_2$/JP-45 | Coating | ATO-containing CHC | 50 | 1.9 |
| Example 4 | 104 | Coating | Si-covered $TiO_2$/PVA124 | $SiO_2$/JP-45 | Coating | ATO-containing CHC | 50 | 2.7 |
| Reference Example 5 | 105 | Coating | $TiO_2$/gelatin | $SiO_2$/gelatin | Coating | ATO-containing CHC | 50 | 2.7 |
| Example 6 | 106 | Coating | Si-covered $TiO_2$/PVA124 | $SiO_2$/JM-33 | Coating | ATO-containing CHC | 50 | 2.7 |
| Example 7 | 107 | Coating | Si-covered $TiO_2$/PVA224 | $SiO_2$/JP-45 | Coating | ATO-containing CHC | 50 | 2.7 |
| Example 8 | 108 | Coating | Si-covered $TiO_2$/PVA124 | $SiO_2$/JP-45 | None | None | 50 | 2.7 |
| Example 9 | 109 | Coating | Si-covered $TiO_2$/PVA124 | $SiO_2$/JP-45 | Coating | ATO-containing CHC | 50 | 2.7 |
| Example 10 | 110 | Coating | $TiO_2$/PVA124 | $SiO_2$/PVA235 | Coating | ATO-containing CHC | 50 | 2.7 |
| Comparative Example 1 | 111 | Sputtering | $Nb_2O_5$ | $SiO_2$ | Coating | ATO-containing CHC | 50 | 2.7 |
| Comparative Example 2 | 112 | CVD | $Nb_2O_5$, $TiO_2$ | $SiO_2$ | Coating | ATO-containing CHC | 50 | 2.7 |

(continued)

| | Sample | Infrared reflecting layer | | | Infrared absorbing layer | | Transparent resin film | |
|---|---|---|---|---|---|---|---|---|
| | | Molding method | High refractive index layer main composition | Low refractive index layer main composition | Molding method | Main composition | Thickness ($\mu$m) | Thermal shrinkage (%) |
| Comparative Example 3 | 113 | Extrusion | PET | Copolymerized PET | Coating | ATO-containing CHC | 50 | 2.7 |
| Remarks) PVA: Polyvinyl alcohol<br>ATO: Antimony-doped tin oxide<br>CHC: Clear hard coat layer<br>ATO-containing CHC: It is a layer obtained by incorporating ATO as an infrared absorber into a clear hard coat layer. | | | | | | | | |

{Evaluation of laminated glass}

For the laminated glasses produced as described above, a performance evaluation as described below was carried out.

<Measurement of visible light transmittance>

The transmittance in the region of 300 nm to 2000 nm was measured for each of the laminated glass samples 101 to 107 using a spectrophotometer (using an integrating sphere, manufactured by Hitachi, Ltd., Model U-4000). The value of the transmittance at 550 nm was used as the visible light transmittance for each case.

<Measurement of solar heat gain coefficient>

The transmittance and reflectance at an interval of 5 nm in the region of 300 nm to 2500 nm were measured for each of the laminated glass samples 101 to 107 using a spectrophotometer (using an integrating sphere, manufactured by Hitachi, Ltd., Model U-4000). Subsequently, computational processing of the measured values and the weight coefficient of solar reflectance was carried out according to the method described in JIS R3106 (1998), and thus the solar heat gain coefficient (TTS) was determined.

<Measurement of glass surface temperature difference>

A laminated glass was left to stand outdoors on a clear day, and the temperature of the glass surface on the side far from the sun was measured immediately after standing and after 2 hours, using a contact type thermometer. Thus, the temperature difference was determined.

Meanwhile, according to the present invention, the heat-insulating effect of the laminated glass can be comprehensively determined from the results of the measurement of the solar heat gain coefficient and the surface temperature difference. That is, a laminated glass having a lower solar heat gain coefficient and a smaller glass surface temperature difference can be considered as a laminated glass having a superior heat-insulating effect.

<Measurement of surface hardness>

The surface hardness of the hard coat layer was measured based on the scratch hardness (pencil method) of JIS K5 600-5-4: 1999. It is preferable for a laminated glass sample to have a hardness of 2H or higher.

<Productivity of laminated glass>

A laminated glass was visually observed, and productivity of the laminated glass was evaluated by the following criteria.

⊙: There was obtained a laminated glass having a satisfactory external appearance, which was free from wrinkled, defective external appearance of the transparent resin film having an infrared reflecting layer formed thereon, or cracks in the infrared reflecting layer.
○: There was obtained a laminated glass having an external appearance in which wrinkled, defective external appearance of the transparent resin film having an infrared reflecting layer formed thereon, or cracks in the infrared reflecting layer were slightly observed, but there was no problem for practical use.
○△: There was obtained a laminated glass having an external appearance in which wrinkled, defective external appearance of the transparent resin film having an infrared reflecting layer formed thereon, or cracks in the infrared reflecting layer were observed to some extent, but there was no problem for practical use.
△: There was obtained a laminated glass having an external appearance in which wrinkled, defective external appearance of the transparent resin film having an infrared reflecting layer formed thereon, or cracks in the infrared reflecting layer were observed in some parts, but there was no problem for practical use.
×: Wrinkled, defective external appearance of the transparent resin film having an infrared reflecting layer formed thereon, or cracks in the infrared reflecting layer were observed over a wide range, and the external appearance was defective; therefore, the laminated glass was not suitable for practical use.

The evaluation results of the respective samples are presented in the following Table 2.

[Table 2]

|  | Sample | Visible light transmittance (%) | Solar heat gain coefficient (%) | Glass surface temperature difference (°C) | Surface hardness | Productivity of laminated glass |
|---|---|---|---|---|---|---|
| Example 1 | 101 | 75 | 55 | 21 | 2H | ○ |
| Example 2 | 102 | 74 | 55 | 24 | 2H | ○ |
| Example 3 | 103 | 77 | 54 | 20 | 2H | ⊙ |
| Example 4 | 104 | 78 | 53 | 12 | 2H | ⊙ |
| Reference Example 5 | 105 | 76 | 56 | 24 | 2H | ⊙ |
| Example 6 | 106 | 77 | 54 | 17 | 2H | ⊙ |
| Example 7 | 107 | 75 | 56 | 23 | 2H | ⊙ |
| Example 8 | 108 | 79 | 58 | 32 | 2H | ⊙ |
| Example 9 | 109 | 74 | 51 | 1 | 2H | ⊙ |
| Example 10 | 110 | 70 | 57 | 25 | 2H | ⊙ |
| Comparative Example 1 | 111 | 69 | 59 | 36 | 2H | × |
| Comparative Example 2 | 112 | 68 | 58 | 35 | 2H | × |
| Comparative Example 3 | 113 | 68 | 55 | 25 | 2H | × |

From the results shown in Table 2, it is understood that the laminated glass of the present invention has excellent visible light transmittance and solar heat gain coefficient, is free from the generation of wrinkles in the optical film when an optical film is sandwiched between glass plates or cracks in the infrared reflecting layer, and exhibits excellent productivity and heat-shielding characteristics, which are represented by visible light transmittance and solar heat gain coefficient.

Furthermore, Comparative Examples 1 and 2 had problems in the electromagnetic wave transmissibility; however, Examples according to the present invention all exhibited satisfactory electromagnetic wave transmissibility. Meanwhile, for the evaluation method for electromagnetic wave transmissibility, a method of providing a single opening on a box made of an electromagnetic wave shielding material, attaching a laminated glass of each of Examples and Comparative Examples thereto without any break, placing a mobile telephone in the box, and directly checking the communication state (whether calling to a mobile telephone outside the box, or whether the calling voice was clearly heard), was employed. As a result, in all of the Examples of the present invention, calling was enabled, and the calling voice was clearly heard. On the contrary, calling was impossible, or the calling voice not clearly heard in Comparative Examples 1 and 2.

## Claims

1.  A laminated glass comprising at least two sheets of glass plates laminated together with an intermediate layer disposed therebetween,
    wherein the intermediate layer is formed by sandwiching an optical film containing an infrared reflecting layer on a transparent resin film between two sheets of intermediate films containing a thermoplastic resin, and
    the infrared reflecting layer is formed by alternately laminating a high refractive index layer containing a first water-soluble binder resin and first metal oxide particles, and a low refractive index layer containing a second water-soluble binder resin and second metal oxide particles, said first and second water-soluble binder resins being polyvinyl alcohols, **characterized in that**
    the degree of saponification of a polyvinyl alcohol (A) as the first water-soluble binder resin and the degree of

EP 2 848 595 B1

saponification of a polyvinyl alcohol (B) as the second water-soluble binder resin are different from each other.

2. The laminated glass according to claim 1, wherein the difference in the degree of saponification between the polyvinyl alcohol (A) and the polyvinyl alcohol (B) is 5 mol% or more.

3. The laminated glass according to claim 1 or claim 2, wherein the first metal oxide particles are titanium oxide particles surface-treated with a silicon-containing hydrated oxide.

4. The laminated glass according to any one of claims 1 to 3, wherein the transparent resin film has a thickness of 30 to 200 $\mu$m and a thermal shrinkage at a temperature of 150°C of 0.1% to 3.0%.

5. The laminated glass according to any one of claims 1 to 4, wherein the optical film further comprises an infrared absorbing layer.

6. The laminated glass according to any one of claims 1 to 5, wherein the laminated glass has a visible light transmittance of 70% or higher, and a solar heat gain coefficient 60% or less.

7. The laminated glass according to any one of claims 1 to 6, wherein the optical film has a region with a reflectance of higher than 50% in the wavelength region of 900 to 1400 nm.

8. The laminated glass according to any one of claims 1 to 7, wherein the total number of layers of the high refractive index layer and the low refractive index layer is 100 layers or less and 15 layers or more.

9. The laminated glass according to any one of claims 1 to 8, wherein the intermediate film comprises an ethylene-vinyl acetate copolymer or a polyvinyl butyral.

10. The laminated glass according to any one of claims 1 to 9, wherein the intermediate film comprises fine particles absorbing infrared radiation.

**Patentansprüche**

1. Verbundglas, umfassend mindestens zwei Lagen aus Glasscheiben, die mit einer dazwischen angeordneten Zwischenschicht miteinander laminiert sind,
wobei die Zwischenschicht gebildet wird, indem ein optischer Film, der eine Infrarot reflektierende Schicht auf einem transparenten Harzfilm enthält, zwischen zwei Lagen von ein Thermoplastharz enthaltenden Zwischenfilmen eingelegt wird, und
die Infrarot reflektierende Schicht gebildet wird, indem eine Schicht mit hohem Brechungsindex, die ein erstes wasserlösliches Trägerharz und erste Metalloxidpartikel enthält, und eine Schicht mit niedrigem Brechungsindex, die ein zweites wasserlösliches Trägerharz und zweite Metalloxidpartikel enthält, abwechselnd laminiert werden, wobei es sich bei dem ersten und dem zweiten wasserlöslichen Trägerharz um Polyvinylalkohole handelt, **dadurch gekennzeichnet, dass**
der Verseifungsgrad eines Polyvinylalkohols (A) als das erste wasserlösliche Trägerharz und der Verseifungsgrad eines Polyvinylalkohols (B) als das zweite wasserlösliche Trägerharz voneinander verschieden sind.

2. Verbundglas nach Anspruch 1, wobei der Unterschied des Verseifungsgrads zwischen dem Polyvinylalkohol (A) und dem Polyvinylalkohol (B) 5 mol-% oder mehr beträgt.

3. Verbundglas nach Anspruch 1 oder Anspruch 2, wobei es sich bei den ersten Metalloxidpartikeln um mit einem siliziumhaltigen hydratisierten Oxid oberflächenbehandelte Titanoxidpartikel handelt.

4. Verbundglas nach einem der Ansprüche 1 bis 3, wobei der transparente Harzfilm eine Dicke von 30 bis 200 $\mu$m und eine Wärmeschrumpfung bei einer Temperatur von 150 °C von 0,1 % bis 3,0 % aufweist.

5. Verbundglas nach einem der Ansprüche 1 bis 4, wobei der optische Film ferner eine Infrarot absorbierende Schicht umfasst.

6. Verbundglas nach einem der Ansprüche 1 bis 5, wobei das Verbundglas einen Durchlassgrad für sichtbares Licht von 70 % oder mehr und einen Gesamtenergiedurchlassgrad (Solar Heat Gain Coefficient) von 60 % oder weniger aufweist.

7. Verbundglas nach einem der Ansprüche 1 bis 6, wobei der optische Film einen Bereich mit einem Reflexionsgrad von mehr als 50 % in dem Wellenlängenbereich von 900 bis 1400 nm aufweist.

8. Verbundglas nach einem der Ansprüche 1 bis 7, wobei die Gesamtzahl von Schichten der Schicht mit hohem Brechungsindex und der Schicht mit geringem Brechungsindex 100 Schichten oder weniger und 15 Schichten oder mehr beträgt.

9. Verbundglas nach einem der Ansprüche 1 bis 8, wobei der Zwischenfilm ein Ethylen-Vinylacetat-Copolymer oder ein Polyvinylbutyral umfasst.

10. Verbundglas nach einem der Ansprüche 1 bis 9, wobei der Zwischenfilm Infrarotstrahlung absorbierende Feinpartikel umfasst.


**Revendications**

1. Verre stratifié comportant au moins deux feuilles de plaques de verre stratifiées ensemble avec une couche intermédiaire disposée entre elles,
dans lequel la couche intermédiaire est formée par la prise en sandwich d'un film optique contenant une couche réfléchissant les infrarouges sur un film de résine transparent entre deux feuilles de films intermédiaires contenant une résine thermoplastique, et
la couche réfléchissant les infrarouges est formée en stratifiant en alternance une couche à indice de réfraction élevé contenant une première résine de liant soluble dans l'eau et des premières particules d'oxyde métallique, et une couche à faible indice de réfraction contenant une deuxième résine de liant soluble dans l'eau et des deuxièmes particules d'oxyde métallique, lesdites première et deuxième résines de liant solubles dans l'eau étant des alcools polyvinyliques, **caractérisé en ce que**
le degré de saponification d'un alcool polyvinylique (A) sous la forme de la première résine de liant soluble dans l'eau et le degré de saponification d'un alcool polyvinylique (B) sous la forme de la deuxième résine de liant soluble dans l'eau sont différents l'un par rapport à l'autre.

2. Verre stratifié selon la revendication 1, dans lequel la différence dans le degré de saponification entre l'alcool polyvinylique (A) et l'alcool polyvinylique (B) est de 5 mol % ou plus.

3. Verre stratifié selon la revendication 1 ou la revendication 2, dans lequel les premières particules d'oxyde métallique sont des particules de dioxyde de titane traitées en surface par un oxyde hydraté contenant du silicium.

4. Verre stratifié selon l'une quelconque des revendications 1 à 3, dans lequel le film de résine transparent a une épaisseur de 30 à 200 $\mu$m et un retrait thermique à une température de 150 °C de 0,1 % à 3,0 %.

5. Verre stratifié selon l'une quelconque des revendications 1 à 4, dans lequel le film optique comporte par ailleurs une couche absorbant les infrarouges.

6. Verre stratifié selon l'une quelconque des revendications 1 à 5, dans lequel le verre stratifié a une transmittance de lumière visible de 70 % ou plus, et un coefficient d'apport par rayonnement solaire de 60 % ou moins.

7. Verre stratifié selon l'une quelconque des revendications 1 à 6, dans lequel le film optique a une région ayant un facteur de réflexion de plus de 50 % dans la zone de longueur d'onde de 900 à 1400 nm.

8. Verre stratifié selon l'une quelconque des revendications 1 à 7, dans lequel le nombre total de couches de la couche à indice de réfraction élevé et de la couche à faible indice de réfraction est de 100 couches ou moins et de 15 couches ou plus.

9. Verre stratifié selon l'une quelconque des revendications 1 à 8, dans lequel le film intermédiaire comporte un copolymère d'acétate de vinyle-éthylène ou un polybutyral de vinyle.

10. Verre stratifié selon l'une quelconque des revendications 1 à 9, dans lequel le film intermédiaire comporte des particules fines absorbant le rayonnement infrarouge.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008024538 A
- JP 2010222233 A
- US 20110300356
- JP 2007148330 A
- US 20090237782
- WO 2012014654 A
- WO 2012014655 A
- JP HEI1206088 B
- JP SHO61237681 B
- JP SHO63307979 B
- JP HEI7285265 B
- JP HEI79758 B
- JP HEI825795 B
- JP HEI10158015 B
- JP 2000053421 A
- JP 2000063119 A
- JP 2000204301 A
- JP 4550753 B
- JP SHO5714091 B
- JP SHO60219083 B
- JP SHO60219084 B
- JP SHO6120792 B
- JP SHO61188183 B
- JP SHO6317807 B
- JP HEI493284 B
- JP HEI5278324 B
- JP HEI692011 B
- JP HEI6183134 B
- JP HEI6297830 B
- JP HEI781214 B
- JP HEI7101142 B
- JP HEI7179029 B
- JP HEI7137431 B
- WO 9426530 A
- JP SHO5774193 B
- JP SHO5787988 B
- JP SHO62261476 B
- JP SHO5774192 B
- JP SHO5787989 B
- JP SHO6072785 B
- JP SHO61146591 B
- JP HEI195091 B
- JP HEI313376 B
- JP SHO5942993 B
- JP SHO5952689 B
- JP SHO62280069 B
- JP SHO61242871 B
- JP HEI4219266 B
- US 2761419 A
- US 2761791 A
- WO 2008035669 A
- JP HEI7133105 B
- JP 2001233611 A
- JP 2007264581 A

### Non-patent literature cited in the description

- **T.H. JAMES.** The Theory of Photographic Process. Macmillan, 1977, 55
- Kagaku Shashin Benran (Handbook of Scientific Photographs). Maruzen, 72-75
- Shashin Kogaku no Kiso - Gin En Shashin-hen (Fundamentals of Photographic Engineering - Silver Salt photography). Corona Corp, 119-124
- *Research Disclosure,* December 1978, vol. 176 (17643), IX
- Seikagaku Jiten (Encyclopedia of Biochemistry. Tokyo Kagaku Dojin
- Shokuhin Kogyo (Food Industry. 1988, vol. 31, 21
- Kagaku Daijiten (Encyclopedia of Chemistry. Kyoritsu Shuppan Co., Ltd, 1960, 268-270
- Kakyozai Handobuku (Handbook of Crosslinking Agents. Taiseisha, Ltd, October 1981